# EUROPÄISCHE PATENTSCHRIFT

(11) **EP 3 230 003 B1**
(45) Veröffentlichungstag und Bekanntmachung des Hinweises auf die Patenterteilung: **26.09.2018**
(21) Anmeldenummer: 15817776.6
(22) Anmeldetag: 09.12.2015
(51) Int. Cl.: B23K 3/08, B23K 1/00, B23K 101/40, B23K 3/04

(54) **WÄRMEÜBERTRAGUNGSVORRICHTUNG FÜR DIE LÖTVERBINDUNGSHERSTELLUNG ELEKTRISCHER BAUTEILE**
HEAT TRANSFER DEVICE FOR THE PRODUCTION OF ELECTRONIC COMPONENTS VIA SOLDER CONNECTION
DISPOSITIF DE TRANSFERT DE CHALEUR POUR LA PRODUCTION DE COMPOSANTS ÉLECTRONIQUES PAR CONNEXION DE SOUDURE

(30) Priorität: 09.12.2014 DE 102014118245
(43) Veröffentlichungstag der Anmeldung: 18.10.2017
(73) Patentinhaber: PINK GmbH Thermosysteme, 97877 Wertheim (DE)
(72) Erfinder: OETZEL, Christoph, 97896 Freudenberg-Boxtal (DE); CLÄRDING, Sebastian, 97072 Würzburg (DE)
(74) Vertreter: Spachmann, Holger
(86) Internationale Anmeldenummer: PCT/EP2015/079145
(87) Internationale Veröffentlichungsnummer: WO 2016/091962

(56) Entgegenhaltungen:
- WO-A1-2014/115583
- DE-A1-102007 010 611
- DE-A1-102011 081 606
- GB-A- 1 363 710
- US-A- 6 053 394

## Beschreibung

Die Erfindung betrifft eine Wärmeübertragungsvorrichtung gemäß dem Oberbegriff von Anspruch 1, die bei der Herstellung von Lötverbindungen zum Beispiel in einer Lötvorrichtung eingesetzt werden kann.

Um ein optimales Lötergebnis vor allem bei großflächigen Lötungen zu erzielen, sollte das aufgeschmolzene Lot zusammen mit den zu verbindenden Lötpartnern oder Bauteilen kontrolliert über den Schmelzpunkt des Lotes erwärmt und anschließend kontrolliert unter den Erstarrungspunkt abgekühlt werden, um die Lötpartner miteinander lunkerfrei zu verbinden.

### STAND DER TECHNIK

Unter den Begriffen "Bauteile" bzw. "Lötpartner" werden allgemein Substrate, Substratträger, Grundplatten, Werkstückträger, Montageträger oder dergleichen aus Metall, Keramik, Kunststoff oder anderen Materialien oder beliebigen Materialkombinationen sowie darauf zu befestigende Bauelemente wie Leistungshalbleiterchips, (Halbleiter-)Baugruppen oder dergleichen verstanden.

Als in diesem Sinn großflächige Lötungen werden beispielsweise Lötungen verstanden, bei denen beispielsweise Leistungshalbleiterchips wie z. B. IGBTs, MOSFETs oder Dioden auf metallisierte Keramiksubstrate gelötet werden, oder bei denen metallisierte Keramiksubstrate auf metallische Grundplatten für ein Leistungshalbleitermodul gelötet werden.

Eine Lötvorrichtung mit einer als Kühlvorrichtung ausgebildeten Wärmeübertragungsvorrichtung zum Abkühlen des noch flüssigen Lotes mindestens einer herzustellenden großflächigen Lötverbindung kann bevorzugt eine evakuierbare Kammer, eine in der evakuierbaren Kammer angeordnete Halterung, sowie eine in der evakuierbaren Kammer angeordnete Wärmesenke umfassen. Hierdurch kann ein Lötvorgang unter Vakuum oder unter einer definierbaren Prozessgasatmosphäre durchgeführt werden, um Verunreinigungen oder Oxidationsvorgänge auszuschließen.

In die Halterung kann eine als Testkörper dienende Metallplatte eingelegt werden, mit der sich die Wirkungsweise der Kühlvorrichtung testen und überprüfen lässt. Die Metallplatte weist eine untere Hauptfläche auf, eine obere Hauptfläche, die in einer vertikalen Richtung von der unteren Hauptfläche beabstandet ist, sowie eine Anfangstemperatur von mindestens 200°C. Auf der oberen Hauptfläche lässt sich eine Anzahl von N ≥ 1 nebeneinanderliegender, rechteckiger Oberflächenabschnitte mit einer Fläche von jeweils wenigstens 30 mm x 30 mm oder von jeweils wenigstens 50 mm x 50 mm festlegen.

Ein Werkstückträger bzw. die Metallplatte kann nun in der Kammer mithilfe einer Wärmesenke gekühlt werden. Als Referenz für die an der Metallplatte erzielte Kühlwirkung kann eine in der Kammer vorherrschende Stickstoffatmosphäre bei einem Druck von um die 1013,25 hPa dienen. Der Kühlbetrieb kann allerdings auch ganz oder teilweise bei beliebigen anderen Drücken, beispielsweise bei Unterdruck, erfolgen, z. B. bei einem Absolutdruck, der beispielsweise im Bereich von 1 hPa bis 1013,25 hPa liegen kann, und/oder auch teilweise bei Überdruck, d. h. bei einem Absolutdruck von mehr als 1013,25 hPa. Unabhängig davon kann das Abkühlen in beliebiger Atmosphäre erfolgen, beispielsweise an der Luft oder in einer die Oxidation der Lötpartner verhindernden Schutzgasatmosphäre erfolgen, z. B. einer Stickstoffatmosphäre (N₂), einer Kohlendioxidatmosphäre (CO₂), einer Wasserstoffatmosphäre (H₂), einer Heliumatmosphäre (He) oder einer Formiergasatmosphäre (N₂H₂).

Das Kühlen der Metallplatte mithilfe der Wärmesenke erfolgt so, dass die Temperatur an der oberen Hauptfläche in keinem der rechteckigen Oberflächenabschnitte ein lokales Maximum aufweist, das vom Rand des betreffenden Oberflächenabschnitts beabstandet ist, und zwar so lange, bis in keinem der Oberflächenabschnitte eine Mindestabkühltemperatur von mehr als 200 °C oder von mehr als 150 °C vorliegt. Wenn das Lot z. B. bei 200 °C oder z.B. bei 150 °C ausreichend verfestigt ist, so liegt eine fertig gefügte Lötverbindung zwischen den Lötpartnern vor. Im realen Fertigungsprozess können einer der Lötpartner als unterster Lötpartner passgenau in die Halterung eingelegt und ein oder mehrere weitere Lötpartner auf diesen aufgelegt werden, wobei zwischen die jeweils zu verbindenden Lötpartner noch ein Lot platziert wird. Bei dem Lot kann es sich beispielsweise um ein vorgeformtes Lotplättchen ("pre-form Lot) handeln, oder um eine Lötpaste, die bei einem oder beiden der jeweils zu verbindenden Lötpartner auf die mit dem anderen Lötpartner zu verbindende Fügefläche aufgetragen wird.

Anstelle einen der Lötpartner als untersten passgenau in die Halterung einzulegen, kann dieser auch auf eine Trägerplatte aufgelegt werden, die passgenau in die Halterung eingesetzt wird. Der oder die weiteren Lötpartner werden in gleicher Weise wie oben beschrieben zusammen mit einem Lotplättchen oder einer aufgetragenen Lötpaste auf den untersten Lötpartner aufgelegt. Bei dieser Variante können auch mehrere Gruppen mit zwei oder mehr jeweils miteinander zu verbindender Lötpartner auf dieselbe Weise nebeneinander auf der gemeinsamen Trägerplatte platziert werden. Die Trägerplatte ist nach Abschluss des Lötprozesses kein Bestandteil des gelöteten Verbundes.

Bei der Kühlvorrichtung kann es sich z. B. um einen Teil einer Lötanlage handeln, mit deren Hilfe das Lötgut in einer evakuierbaren Kammer der Kühlanlage wie oben erläutert abgekühlt werden kann, nachdem es mittels einer Heizvorrichtung in der evakuierbaren Kammer oder in einer separaten Heizkammer bis über den Schmelzpunkt des Lotes erwärmt wurde, so dass das Lot aufschmilzt. Bei Verwendung einer separaten Heizkammer kann zwischen dieser und der evakuierbaren Kammer der Kühlvorrichtung eine Schleuse vorgesehen sein, sowie eine Transportvorrichtung, mit der das über den Schmelzpunkt des verwendeten Lotes erhitzte Lötgut von der Heizkammer in die evakuierbare Kammer der Kühlvorrichtung transportiert wird. Gleichwohl können eine Vorheizkammer, eine Lötkammer und eine Kühlkammer vorgesehen sein, die jeweils durch Schleusen gasdicht oder mechanisch voneinander abtrennbar sind, und durch die über eine Transportvorrichtung ein zu verlötendes Bauteil geführt werden kann.

Aus dem Stand der Technik ist beispielsweise eine gattungsgleiche als Kühlvorrichtung ausgebildete Wärmeübertragungsvorrichtung gemäß DE 10 2011 081 606 A1 bekannt. Die Wärmeübertragungsvorrichtung ist eingerichtet, mittels Kaltluft eine definierte Wärmeverteilung auf zu verlötenden Bauteilen bereitzustellen. Hierzu ist eine Anordnung von Kaltluftdüsen oder eine Kaltluftblende mit einer Mehrzahl von Ausnehmungen vorgesehen, um auf einer Kupferplatte einen gewünschten Temperaturgradienten herzustellen. Alternativ kann auch eine Wärmesenke vorgesehen sein, die einen inhomogenen Wärmeleiter umfassen kann, oder die nebeneinander angeordnete, und unabhängig voneinander in vertikaler Richtung verfahrbare, auch ineinander geschachtelte Kühlelemente aufweist. Das Kühlprinzip beruht auf eine Gaskonvektion und benötigt aktive Komponenten zur Bereitstellung eines zirkulierenden Gases, wobei eine Kühlung unter Vakuum nicht bereitstellbar ist. Auch ist eine steuerbare partielle und vollflächige Kühlung durch Abstandsänderung nicht möglich. Die Kupferplatte, die zwischen Kühldüsen / Kühlelementen und zu verlötenden Bauteilen angeordnet ist, bewirkt eine Homogenisierung der Temperaturverteilung, so dass kein definierter Temperaturgradient bereitstellbar ist.

In der Praxis werden oftmals Baugruppen oder Bauelemente verlötet, die auf gekrümmten bzw. gebogenen Grundplatten angeordnet sind. Auch verziehen sich Grundplatten bei Erwärmung oder Abkühlung, so dass in der Regel der Lötprozess auf einer gebogenen Grundplatte durchzuführen ist. Die Grundplatte dient als Montageträger für die Baugruppe, zum Beispiel eine Halbleiterbaugruppe für Hochleistungsanwendungen wie beispielsweise Umrichter wie Gleich- oder Wechselrichter in einer Motor- oder Generatoranwendung. Ein Beispiel für solche Anwendungen ist ein Umrichter in einer Windkraftanlage. Derartige Windkraftanlagen werden zunehmend auch auf hoher See ("Offshore") installiert, was hohe Anforderungen an die Zuverlässigkeit aller Komponenten stellt, da Wartung und Instandsetzung mit einem im Vergleich zu an Land installierten Anlagen nochmals erhöhten Wartungsaufwand verbunden ist. Wegen der Höhe der übertragenen elektrischen Leistung sind die Lötverbindungen besonderen Belastungen ausgesetzt, so dass die Anforderungen an die Lötqualität außerordentlich hoch sind. Lötfehler wie Lunker, Risse oder dergleichen müssen unbedingt verhindert werden, um kostenträchtige Reparaturen und Stillstände der Windkraftanlage durch ausgefallene Umrichter zu vermeiden.

Bei derartigen Leistungsanwendungen übernimmt die Grundplatte auch die Funktion eines Kühlkörpers, um überschüssige Wärme der Baugruppe abzuführen und die Baugruppe zu kühlen. Letztlich kann die Grundplatte als gemeinsame Erdungsverbindung oder Common-Ground-Verbindung dienen, um ein elektrisches Referenzpotential für den oder die Bauträger herzustellen. Aus diesem Grund ist die Grundplatte aus einem thermisch leitfähigen Material, vielfach aus Metall, gefertigt.

Es können im Bereich der elektrischen Energietechnik, insbesondere bei einer Dreiphasenanwendung, 3, 6 oder ein Vielfaches von 3 Baugruppen auf einer Grundplatte verlötet werden. Die Bauteile oder Gruppe von Bauteilen umfasst einen oder mehrere Substratträger, z.B. aus Keramik oder Kunststoff, die auf der Rückseite eine lötfähige Metallisierung aufweisen, und die vollflächig oder punktuell mit der Grundplatte durch eine Lötverbindung elektrisch wie thermisch verbunden werden. Hierbei ergibt sich das Problem, dass bei dem Lötprozess, der mit einem hohen Temperaturgradienten verbunden sein kann, unterschiedliche Ausdehnungen von Grundplatte und Baugruppensubstrat auftreten, wodurch es zu einem mechanischen Verzug des Gesamtbauteils kommt, ähnlich wie bei einem Bimetall. Es werden thermisch bedingte Biegungsabweichungen der Grundplatte gegenüber einer horizontalen Referenzfläche von 0.3 mm oder mehr erreicht. Eine relativ hohe Kühlrate ist insbesondere prozesstechnisch wichtig, um eine ausreichend große Temperaturdifferenz innerhalb der Lotdepots aufrecht zu erhalten. Hierdurch kann noch flüssiges Lot in bereits erstarrte Gebiete nachfließen. Bei niedrigen Kühlraten homogenisiert die Temperatur sich über das gesamte Produkt, so dass dieser Effekt nicht genutzt werden kann. Dabei ist es wünschenswert, dass Kühlraten von 2 K/sec oder mehr erreicht werden können, auch um einen hohen Bauteildurchsatz der Lötanlage zu erreichen.

Um einer thermisch bedingten Durchbiegung bei einem Lötverbinden unterschiedlicher Materialien entgegenzuwirken, wird die Grundplatte in einer Weise vorgeformt, meist vorgebogen, so dass nach dem Verlöten und Erstarren der Lötverbindung das Gesamtbauteil planar ausgerichtet ist. Hierbei ergibt sich das Problem, dass Bauteile und Baugruppen auf einer gebogenen Grundplatte bzw. Bauteilträger aufgelötet und in einer kontrollierten Weise erwärmt bzw. abgekühlt werden müssen. Dabei ist insbesondere der Entwärmungsprozess wichtig, da hohe mechanische Spannungen bei dem Abkühlen verschiedener Materialien auftreten, die die Qualität der Lötverbindung nachteilig beeinflussen.

Ziel der Erfindung ist es, eine Wärmeübertragungsvorrichtung vorzuschlagen, die Folgendes erreicht:
- gebogene Bauteile bzw. Grundplatten vollflächig homogen zu erwärmen;
- den Erstarrungsprozess durch lokal begrenzte Entwärmung und Wärmeerhalt kontrolliert zu beeinflussen, damit keine Risse im Lot entstehen; und
- einen Wechsel auf großflächige Kühlung nach Erstarrung des Lotes zu ermöglichen, um die Prozesszeit zu verkürzen.

Die Aufgabe der vorliegenden Erfindung besteht darin, eine Wärmeübertragungsvorrichtung zum kontrollierten Erwärmen und/oder zum kontrollierten Abkühlen des noch flüssigen Lotes einer herzustellenden großflächigen Lötverbindung bereitzustellen.

Diese Aufgabe wird durch eine Wärmeübertragungsvorrichtung mit den Merkmalen des Anspruchs 1 gelöst.

Ausgestaltungen und Weiterbildungen der Erfindung sind Gegenstand von Unteransprüchen.

### OFFENBARUNG DER ERFINDUNG

Erfindungsgemäß wird eine Wärmeübertragungsvorrichtung zum thermischen Koppeln eines zu verlötenden Bauteils mit einer Wärmequelle und/oder einer Wärmesenke in einer Lötanlage, mit zumindest einer Basisplatte, welche dazu ausgelegt ist, in thermischen Kontakt zumindest mit der Wärmequelle und/oder der Wärmesenke zu stehen, vorgeschlagen. Die Basisplatte weist zumindest zwei, insbesondere mehrere, eine jeweilige Kontaktfläche aufweisende Kontakteinheiten auf, wobei die Kontaktflächen mit dem Bauteil thermisch kontaktierbar sind. Die Kontakteinheiten sind derart ausgebildet, dass die relativen Abstände zwischen den Kontaktflächen und der dem Bauteil zugewandten Oberfläche der Basisplatte veränderbar sind.

Der Erfindung liegt der Gedanke zu Grunde, durch die zumindest zwei, insbesondere mehrere Kontakteinheiten einen thermischen Kontakt zu der Wärmequelle oder der Wärmesenke bzw. zu der damit in Verbindung stehenden Basisplatte gezielt herzustellen, so dass nur bestimmte jeweilige Bereiche des thermisch kontaktierten Bauteils erwärmt bzw. abgekühlt werden. Die selektive Kühl-/Heizwirkung beruht auf einer Kontaktkühlung/-erwärmung, die punktgenau eine Kühlwirkung/Heizwirkung und einen hohen Temperaturgradienten bereitstellen kann. Somit tritt nicht die gesamte Basisplatte mit dem Bauteil in thermischem Kontakt, sondern nur die Teilbereiche, welche die Kontakteinheiten aufweisen, wobei eine Erwärmung und/oder Abkühlung des Bauteils im Bereich der Kontaktflächen der Kontakteinheiten erfolgt. Aufgrund der Veränderbarkeit der relativen Abstände zwischen den Kontaktflächen unter dem Bauteil zugewandten Oberfläche der Basisplatte wird erreicht, dass auch nicht plane Bauteile wie die vorstehend genannten gekrümmten Grundplatten zuverlässig kontaktiert werden können, so dass sich die Abstände der Kontaktflächen an die Kontur des zu kontaktierenden Bauteils anpassen können. Dadurch wird eine Vielpunktkontaktierung geschaffen, die insbesondere bei einem Löten unter Vakuum von Vorteil ist, da in dem Fall eine bei einem Löten unter Umgebungsdruck gegebene Überbrückung von etwaigen Spalten zwischen Basisplatte und Bauteil durch Konvektion entfällt. Die mechanische Umsetzung ist relativ einfach und die Kühl-/Heizwirkung kann unter Vakuum und ohne Konvektion erreicht werden.

Vorteilhafterweise sind hierbei die relativen Abstände zwischen den Kontaktflächen und der dem Bauteil zugewandten Oberfläche der Basisplatte entgegen einer von den jeweiligen Kontakteinheiten ausgeübten Federkraft und/oder Stellkraft veränderbar. Das kann beispielsweise dadurch erreicht werden, dass die Kontakteinheiten Federelemente umfassen oder aus einem elastischen Material hergestellt sind, was nachfolgend noch näher erläutert wird. Grundsätzlich wäre es für eine Funktion der Wärmeübertragungsvorrichtung jedoch auch ausreichend, wenn die Basisplatte allgemein hervorstehende Kontaktflächen aufweist, welche auch ohne relative Abstandsänderung mit dem Bauteil kontaktierbar sind.

Die Kontaktflächen der Kontakteinheiten können plan sein oder auch gekrümmt, wobei sich der genannte relative Abstand bei gekrümmten Kontaktflächen auf einen Punkt der Kontaktfläche bezieht, welcher den größten Abstand zu der Basisplatte aufweist. Die erfindungsgemäße Wärmeübertragungsvorrichtung kann grundsätzlich lageunabhängig eingesetzt werden, so dass eine Unterseite, eine Oberseite oder auch Unter- und Oberseite des oder der Bauteile thermisch kontaktiert werden können. Insofern sind entsprechende Lagebezeichnungen wie "oben" oder "unten" in dieser Anmeldung nicht einschränkend, sondern beziehen sich auf das jeweilige Ausführungsbeispiel und die Figuren.

Gemäß einer vorteilhaften Ausführungsform der Erfindung ist der Abstand zwischen der Basisplatte und dem Bauteil veränderbar, wobei die Kontakteinheiten derart ausgebildet sind, dass die relativen Abstände zwischen den Kontaktflächen und der dem Bauteil zugewandten Oberfläche der Basisplatte in Abhängigkeit von einer Änderung des Abstandes zwischen der Basisplatte und dem Bauteil, insbesondere in Abhängigkeit von einer dadurch verursachten Änderung des Anpressdrucks, welche die Basisplatte gegen das Bauteil gepresst wird, veränderbar sind. Hierbei kann die relative Abstandsänderung zwischen den Kontaktflächen und der Basisplatte durch die bereits vorstehend erwähnte Elastizität der Kontakteinheiten erzielt werden. Dadurch ist es möglich, den relativen Abstand für jede Kontakteinheit unabhängig von anderen Kontakteinheiten zu verändern. Somit ist eine zuverlässige thermische Kontaktierung auch von solchen Bauteilen gewährleistet, die eine nicht plane Kontur aufweisen oder sich während des Lötvorgangs aufgrund von thermischen Vorgängen verformen.

Vorteilhafterweise können die Kontakteinheiten versetzbar in Ausnehmungen, welche in der Basisplatte vorgesehen sind, aufgenommen sein, wobei insbesondere die Kontakteinheiten in eine Einfahrposition versetzt werden können, in welcher die Kontaktflächen der Kontakteinheiten bündig mit der dem Bauteil zugewandten Oberfläche der Basisplatte sind. Die Versetzbarkeit der Kontakteinheiten kann insbesondere dadurch erreicht werden, dass die Kontakteinheiten Federelemente aufweisen oder aus elastischem Material hergestellt sind. Weiterhin kann das Versetzen der Kontakteinheiten auch mithilfe von geeigneten Verstellmitteln erfolgen, beispielsweise durch mechanische, pneumatische, elektromagnetische oder hydraulische Verstellmittel. Durch die Möglichkeit, die Kontakteinheiten in die genannte Einfahrposition zu versetzen, kann erreicht werden, dass das Bauteil bzw. eine mit dem Bauteil in thermischem Kontakt stehende Trägerplatte, auf der das Bauteil gelagert ist, großflächig thermisch zu kontaktieren, d.h. auch Bereiche des Bauteils erwärmen oder abkühlen zu können, die außerhalb der Einfahrposition nicht mit den Kontaktflächen in Berührung stehen. In der Einfahrposition beträgt somit der relative Abstand zwischen den Kontaktflächen und der dem Bauteil zugewandten Oberfläche der Basisplatte null.

Gemäß einer weiteren vorteilhaften Ausführungsform sind die Kontakteinheiten aus einem an der dem zu verlötenden Bauteil zugewandten Seite der Basisplatte vorgesehenen elastischen, wärmeleitfähigen Material, insbesondere einer Metallpaste, einem mit Metallpartikeln, z.B. Silberpartikel, versetzten Epoxidharz und/oder einem leitfähigen elastomeren Werkstoff gebildet. Die Kontakteinheiten werden hierbei durch so genannte Pads gebildet, die eine beliebige Gestalt und/oder Größe aufweisen können, wobei die Gestalt und/oder Größe auch von Kontakteinheit zu Kontakteinheit variieren kann. Derartige Kontakteinheiten sind kostengünstig herzustellen und ermöglichen insbesondere eine individuelle Anpassung an unterschiedliche zu verlötenden Bauteile mit nur geringem Herstellungsaufwand.

Gemäß noch einer weiteren vorteilhaften Ausführungsform umfasst eine jeweilige Kontakteinheit einen relativ zu der Basisplatte verstellbaren, die Kontaktflächen aufweisenden Kontaktstift. Der Kontaktstift selbst kann starr sein und besteht vorzugsweise aus einem thermisch gut leitenden Material wie Aluminium oder Kupfer. Der Querschnitt des Kontaktstifts kann rund oder mehreckig, insbesondere quadratisch sein. Es ist ferner möglich, den Kontaktstift mit einem Gold-oder Silberüberzug zu versehen.

In dem Zusammenhang hat es sich als vorteilhaft erwiesen, wenn auf einer Stirnfläche des Kontaktstifts ein elastisches, wärmeleitfähiges Material, insbesondere ein mit Metallpartikeln versetztes Epoxidharz und/oder ein leitfähiger elastomerer Werkstoff aufgebracht ist. Dadurch wird gewährleistet, dass die gesamte Stirnfläche des Kontaktstifts oder zumindest ein großer Teil der Stirnfläche in thermischen Kontakt mit dem Bauteil treten kann, auch wenn der Kontaktstift und das Bauteil konstruktions- und/oder fertigungsbedingt gegeneinander verkantet sind, so dass ohne das aufgebrachte wärmeleitfähige Material nur ein partieller kleiflächiger Kontakt zwischen dem Kontaktstift und dem Bauteil möglich wäre. In dem Fall bildet das wärmeleitfähige Material die Kontaktfläche.

Vorteilhafterweise ist der Kontaktstift federnd gelagert, wobei die Lagerung z.B. an der Basisplatte oder auch an einer mit der Basisplatte thermisch kontaktierbaren Wärmequelle und/oder Wärmesenke erfolgen kann.

In dem Zusammenhang hat es sich als vorteilhaft erwiesen, wenn ein jeweiliger Kontaktstift eine einseitig geschlossene, thermisch leitfähige Hülse aufweist, deren geschlossene Stirnfläche dem zu verlötenden Bauteil zugewandt ist, wobei in der Hülse eine Feder, insbesondere Schraubenfeder, aufgenommen ist, welche zumindest im unbeaufschlagten Zustand teilweise aus der offenen Stirnfläche der Hülse herausragt und mit der Hülse thermisch verbunden ist, wobei insbesondere in einem Inneren der Feder an ihrem aus der Hülse herausragenden freien Ende ein thermisch leitfähiger Bolzen aufgenommen ist, welcher mit der Feder thermisch verbunden ist, wobei vorteilhafterweise eine endseitige Stirnfläche des Bolzens bündig mit einer Stirnfläche des freien Endes der Feder abschließt oder aus der Feder hervorsteht. Die Hülse weist vorzugsweise einen zylindrischen Querschnitt auf. Die geschlossene Stirnfläche kann die Kontaktfläche aufweisen. Der Bolzen kann mit seiner endseitigen Stirnfläche mit einer Wärmequelle und/oder einer Wärmesenke in Verbindung stehen bzw. daran befestigt sein. Der Bolzen verbessert die Wärmeübertragung an die Feder und kann zugleich als Endanschlag für die Hülse dienen und damit den Federweg begrenzen.

Alternativ zur vorherigen Ausführungsform kann ein jeweiliger Kontaktstift einen thermisch leitfähigen Bolzen aufweisen, dessen Stirnfläche dem zu verlötenden Bauteil zugewandt ist. Am unteren, axial der Stirnfläche des Bolzens gegenüberliegenden Ende kann eine Feder, insbesondere Schraubenfeder an einer Federnase des Bolzens aufgenommen sein. Die Feder kann an ihrer, der Federnase des Bolzens abgewandten Seite auf einer Kontaktplatte bevorzugt gemeinsam mit anderen Kontaktstiften abstützt sein. Der Bolzen kann am Sitz der Federnase einen radialen Vorsprung aufweisen, der sich im unbeaufschlagten Zustand der Feder an einer radialen Verengung der Ausnehmung der Basisplatte abstützt. Somit wird ein Kontaktstift einer Kontakteinheit vorgeschlagen, der einen Bolzen aus einem thermisch leitfähigen Vollmaterial aufweist. Der Bolzen weist eine Kontaktfläche auf, die einem zu verlötenden Bauteil zugewandt ist und dieses thermisch kontaktieren kann und weist am axial gegenüberliegenden Ende eine Federnase auf, die als Sitz einer Kontaktfeder zum federnden Kontaktieren an die Unterseite des Bauteils dient. Die Feder ist auf einer Kontaktplatte abgestützt, auf der mehrere Kontaktstifte einer Kontakteinheit angeordnet sein können. Somit kann eine Kontakteinheit mit mehreren Kontaktstiften auf einer Kontaktplatte vorgefertigt und nachträglich in Ausnehmungen einer Basisplatte eingeschoben werden. Die Kontaktplatte kann eine thermische Kopplung an eine unterhalb der Basisplatte angeordnete Heiz- oder Kühlplatte herstellen, so dass z.B. die Temperatur der Basisplatte anders als eine Temperatur der Kontakteinheit wählbar ist. Ein radialer Vorsprung am Übergang von Federnase zum Bolzen begrenzt an einer radialen Verengung der Ausnehmung der Basisplatte den Kontaktweg des Kontaktstifts in Richtung Bauteil, und der Abstand der Stirnfläche der Federnase des Bolzens zur Kontaktplatte begrenzt den Einfahrweg des Kontaktstifts.

Auf diese Weise werden verschiedene Ausführungen von Kontakteinheiten vorgeschlagen, die bei kompakter Bauweise eine sehr gute thermische Leitfähigkeit aufweist und zugleich die gewünschte relative Abstandsänderung zwischen der Kontaktfläche und der dem Bauteil zugewandten Oberfläche der Basisplatte ermöglicht.

Vorteilhafterweise ist eine Wärmekapazität einer Kontakteinheit, insbesondere jeder Kontaktstift derart ausgestaltet, dass sie bezogen auf die Kontaktfläche zwischen der Kontakteinheit und dem Bauteil eine Wärmemenge für eine Differenztemperatur zwischen Löttemperatur und Solidustemperatur eines Lots möglichst schnell, bevorzugt instantan aufnehmen kann. Die Wärmekapazität ist das Verhältnis der zugeführten Wärmeenergie zur bewirkten Temperaturerhöhung und ist bezogen auf eine Kontakteinheit oder eines Kontaktstifts entsprechend zur Materialwahl, d.h. einer spezifischen Wärmekapazität und einer Gewichtsmasse derart auszulegen, so dass beispielsweise bei einer Löttemperatur von 250°C und einer Solidustemperatur von 221 ° eines Lots eine entsprechende Temperatdifferenz möglichst instantan bei Kontakt der Kontakteinheit mit dem Bauteil dem Bauteillot entzogen und dieses zur Erstarrung geführt werden kann. Somit spielt in dieser Ausführung zur Kühlung oder Erwärmung weniger eine thermische Verbindung zwischen Kontakteinheit und Basisplatte eine Rolle als die Wärmespeicherfähigkeit der Kontakteinheit an sich, die sich letztlich in Gewicht und Materialwahl der Kontakteinheit widerspiegelt. In der Regel kann ein Kontaktstift aus massivem Kupfer oder einem gut leitfähigen Material bestehen Vorteilhaft kann die Kontakteinheit ein Phasenwechselmaterial (PCM) umfassen, dass eine Kontakttemperatur festlegt und eine instantane Abkühlung bzw. Erwärmung bei Kontaktierung ermöglicht. Hierdurch kann ein hoher Temperaturgradient erreicht und eine optimierte Einstellung des Lot-Erstarrungsverhalten von einem Innenbereich des Lotdepots hin zu einem Außenbereich beim Abkühlen, bzw. ein Aufschmelzverhalten von außen nach innen des Lotdepots erreicht werden. Eine thermisch leitende Verbindung zwischen Kontakteinheit und Basisplatte stellt insbesondere beim Wechsel von einem Bauteil zum nächsten zur Widerherstellung einer Ausgangstemperatur der Kontakteinheit eine Rolle.

Gemäß einer vorteilhaften Ausführungsform der Erfindung können die Kontaktstifte mechanisch, pneumatisch, hydraulisch oder elektromagnetisch verstellbar sein. Anstelle der vorstehend erwähnten passiven Verstellbarkeit der Kontaktstifte bzw. Kontakteinheiten durch Verwendung von elastischem Material oder Federelementen ist somit auch eine aktive Steuerung der Kontaktstifte über einen Aktuator möglich. Dabei kann ein jeweiliger Kontaktstift separat verstellbar sein, oder es können mehrere Kontaktstifte elastisch oder starr auf einem Kontakteinheitenträger angeordnet werden, welcher relativ zu der Basisplatte verstellbar ist.

Gemäß noch einer weiteren Ausführungsform der Erfindung sind die Kontaktstifte in wenigstens einer, jeweils mehrere Kontaktstifte umfassenden Gruppe angeordnet, wobei in einem unbeaufschlagten Zustand insbesondere die relativen Abstände der Kontaktflächen der Kontaktstifte einer Gruppe zu der Basisplatte bezogen auf die Position der Kontaktstifte in der Gruppe von innen nach außen abnehmen. Unter einem unbeaufschlagten Zustand wird ein Zustand verstanden, in dem keine Andruckkraft zwischen den Kontaktstiften und dem Bauteil und/oder zu einer mit dem Bauteil in thermischem Kontakt stehenden Trägerplatte wirksam ist bzw. keine Beaufschlagung der Kontaktstifte durch einen pneumatischen, hydraulischen oder elektromagnetischen Aktuator erfolgt. Durch diese Ausgestaltung kann erreicht werden, dass in Abhängigkeit von dem Abstand zwischen dem Bauteil bzw. der Trägerplatte zu der Basisplatte die effektive Kontaktfläche der Gruppe von Kontaktstiften verändert werden kann. Beim Annähern der Basisplatte an das Bauteil bzw. die Trägerplatte treten somit zunächst nur ein Kontaktstift oder einige wenige Kontaktstifte mit dem Bauteil bzw. der Trägerplatte in Kontakt. Mit abnehmendem Abstand zwischen dem Bauteil bzw. der Trägerplatte und der Basisplatte treten nacheinander auch weiter außen in der Gruppe vorgesehene Kontaktstifte in thermischen Kontakt mit dem Bauteil bzw. der Trägerplatte. Die unterschiedlichen Abstände im unbeaufschlagten Zustand können beispielsweise durch Verwendung von unterschiedlich langen Kontaktstiften, d.h. durch unterschiedlich lange Hülsen und/oder Schraubenfedern, realisiert werden. Die Kontur der Gruppe kann an die zu verlötenden Bauteile angepasst werden, beispielsweise kann der Umfang der Gruppe kreisförmig oder auch polygonal sein.

Vorteilhafterweise ist die Basisplatte an ihrer dem zu verlötenden Bauteil zugewandten Seite gekrümmt und insbesondere formkomplementär zu dem zu verlötenden Bauteil bzw. zu einer das zu verlötende Bauteil tragenden Trägerplatte ausgebildet. Dadurch ist gewährleistet, dass die Kontakteinheiten möglichst simultan mit dem Bauteil bzw. der Trägerplatte in Kontakt treten können, ohne dass die Kontakteinheiten unterschiedliche Längen aufweisen müssen. Falls die Kontakteinheiten in eine versenkbare Einfahrposition versetzt werden können, kann durch die Wölbung der Basisplatte erreicht werden, dass die Basisplatte möglichst vollflächig mit dem zu verlötenden Bauteil bzw. der Trägerplatte in Kontakt treten kann.

Es hat sich als vorteilhaft erwiesen, wenn die Wärmeübertragungsvorrichtung ferner die Wärmequelle und/oder die Wärmesenke umfasst, wobei die Basisplatte in thermisch leitendem Kontakt mit der Wärmequelle und/oder der Wärmesenke steht. Die Basisplatte kann beispielsweise wahlweise mit der Wärmequelle oder der Wärmesenke in Kontakt stehen oder auch mit einer Wärmequelle oder einer Wärmesenke eine Baueinheit bilden. Ferner ist es möglich, die Wärmequelle und die Wärmesenke in einer Einrichtung zu kombinieren. Die jeweilige Funktion als Wärmequelle oder Wärmesenke kann beispielsweise dadurch erreicht werden, dass diese Einrichtung wahlweise von einem Kühlmittel oder einem Heizmittel durchströmt wird bzw. eine Heizeinrichtung aktiviert wird.

Vorteilhafterweise kann als Heiz- oder Kühlmittel ein temperaturbeständiges Fluid, z.B. auch flüssiges Metall, insbesondere flüssiges Lot, Thermoöl, auch Silikonöle oder hochwärmeleitende Elastomere eingesetzt werden. Auch kann ein Phasenwechselmaterial in der Basisplatte oder in der Kontakteinheit eingesetzt werden. Eine Verbindung zwischen Kontakteinheit und Basisplatte kann z.B. durch ein Preform-Lötplättchen hergestellt werden, dass bei einer Solidustemperatur aufschmilzt und somit eine Art Phasenwechselmaterial darstellt. Hierdurch kann der thermische Widerstand zwischen Kontakteinheit und Wärmequelle-/senke optimiert werden.

Die vorliegende Erfindung betrifft in einem Nebenaspekt eine Lötvorrichtung mit zumindest einer Wärmeübertragungsvorrichtung, welche die Wärmequelle und/oder die Wärmesenke umfasst, wobei die Basisplatte in thermisch leitendem Kontakt mit der Wärmequelle und/oder der Wärmesenke steht, und mit einer Bauteilhalterung, in welcher zumindest ein zu verlötendes Bauteil fixierbar ist, wobei die Bauteilhalterung und die Basisplatte derart relativ zueinander versetzbar sind, dass hierdurch wahlweise die Kontaktflächen der Kontakteinheiten mit dem zu verlötenden Bauteil thermisch leitend kontaktierbar sind und die relativen Abstände zwischen den Kontaktflächen und der dem Bauteil zugewandten Oberfläche der Basisplatte veränderbar sind. Die Lötvorrichtung kann insbesondere mehrere Wärmeübertragungsvorrichtungen aufweisen, wobei z.B. eine Wärmeübertragungsvorrichtung als Heizvorrichtung ausgebildet ist und mit einer Wärmequelle in Verbindung steht und eine weitere Wärmeübertragungsvorrichtung als Kühlvorrichtung ausgebildet ist und mit einer Wärmesenke in Verbindung steht. Die Bauteilhalterung mit dem darin fixierten Bauteil kann wahlweise mit einer dieser Wärmeübertragungsvorrichtungen in thermischen Kontakt gebracht werden, wobei die Wärmeübertragungsvorrichtungen und/oder die Bauteilhalterung entsprechend versetzbar ausgebildet sind.

Grundsätzlich kann ein Bauteil direkt gelötet werden. In der Regel ist das Bauteil in dem Bauteilträger als Bauteilrahmen eingefasst, der zum Transport und Handling dient, so dass kein separates Trägerbauteil bereitgestellt werden muss. Mittels einer Press- oder Klemmeinrichtung kann das Bauteil im Bauteilrahmen fixiert werden. Es hat sich dennoch als vorteilhaft erwiesen, wenn die Bauteilhalterung eine Trägerplatte als Auflage für das zu verlötende Bauteil und eine Presseinrichtung umfasst, welche dazu ausgelegt ist, zumindest das zu verlötende Bauteil insbesondere federbelastet an die Trägerplatte zu pressen, wobei die Trägerplatte zumindest einen Durchgang zum Durchführen der Kontakteinheiten aufweist, thermischen Kontakt zwischen den Kontaktflächen der Kontakteinheiten und dem zu verlötenden Bauteil herzustellen. Mithilfe der Bauteilhalterung lässt sich das zumindest eine zu verlötende Bauteil auf einfache Weise fixieren, wobei es sich bei dem auf der Trägerplatte aufliegenden Bauteil zum Beispiel um eine Grundplatte, einen Substratträger oder dergleichen handeln kann. Das Pressen des auf der Trägerplatte aufliegenden Bauteils kann direkt, d.h. durch unmittelbaren Kontakt der Presseinrichtung mit dem Bauteil, oder indirekt erfolgen, z.B. über weitere Bauteile, die mit dem auf der Trägerplatte aufliegenden Bauteil verbunden werden sollen und die mit der Presseinrichtung in Kontakt stehen.

Die Verwendung einer Trägerplatte erleichtert die Anpassung der Bauteilhalterung an die Dimensionen der zu verlötenden Bauteile. Zudem vereinfacht sich dadurch die Anpassung der Basisplatte an das oder die zu verlötenden Bauteile. Wenn nämlich das als Grundplatte dienende Bauteil zum Ausgleich von thermischen Verspannungen an seiner der Basisplatte zugewandten Seite gekrümmt sein soll, kann beispielsweise eine Trägerplatte zum Einsatz kommen, welche an der diesem Bauteil zugewandten Seite eine zu der Bauteilkrümmung komplementäre Krümmung aufweist, während die andere, der Basisplatte zugewandte Seite der Trägerplatte plan ausgebildet ist. Dadurch können universal einsetzbare Basisplatten verwendet werden. Lediglich die Form der Trägerplatte muss an das zu lagernde Bauteil angepasst werden.

Gemäß einer vorteilhaften Ausführungsform der Lötvorrichtung sind die Bauteilhalterung und die Basisplatte ferner relativ zueinander versetzbar, wobei die Bauteilhalterung und/oder die Wärmeübertragungsvorrichtung derart ausgestaltet sind, dass bei einer Annäherung zwischen der Bauteilhalterung und der Basisplatte über die Kontakteinheiten eine Kraft auf das zu verlötende Bauteil ausgeübt wird, so dass das zu verlötende Bauteil von der Trägerplatte abgehoben wird.

Es ist gegebenenfalls erforderlich, die Presseinrichtung so zu steuern oder zu betätigen, dass die Presskraft, mit welcher das zu verlötende Bauteil an die Trägerplatte gepresst wird, vermindert oder aufgehoben wird. So ist denkbar, die Presskraft der Presseinrichtung einstellbar, beispielsweise elektromagnetisch, elektromechanisch oder andersartig einstellbar auszuüben. In der Regel übersteigt die Presskraft der Presseinrichtung eine Federkraft bzw. Kontaktdruckkraft der Kontakteinheiten, um ein unbeabsichtigtes Ausheben der Bauteile aus der Trägerplatte zu verhindern. Beispielsweise kann die Wärmeübertragungsvorrichtung gemäß einer bereits vorstehend beschriebenen Ausführungsform so ausgestaltet sein, dass die Kontakteinheiten versetzbar in Ausnehmungen vorgesehen sind und in einer Einfahrposition in diesen Ausnehmungen versenkt werden können, so dass die Basisplatte zumindest mit einem Großteil ihrer Fläche mit der Trägerplatte in Kontakt steht. In dieser Position erfolgt somit ein flächiger Wärmeaustausch zwischen der Basisplatte und dem auf der Trägerplatte aufliegenden zu verlötenden Bauteil, wobei dieser Wärmeaustausch indirekt über die Trägerplatte erfolgt. Auf diese Weise kann in der Einfahrposition ein gleichmäßiges Erwärmen des Bauteils erfolgen. Anschließend kann die durch die Presseinrichtung ausgeübte Presskraft reduziert werden, so dass für ein nachfolgendes Abkühlen das auf der Trägerplatte aufliegende Bauteil durch die von den federnden oder elastischen Kontakteinheiten ausgeübte Kraft von der Trägerplatte abgehoben wird.

Vorteilhafterweise weist die Bauteilhalterung ferner zumindest eine Wärmespeicherleiste auf, welche mit dem zu verlötenden Bauteil, insbesondere einem Randbereich des Bauteils, thermisch leitend kontaktierbar ist, wobei insbesondere die Presseinrichtung ferner dazu ausgebildet ist, die Wärmespeicherleiste federbelastet an das zu verlötende Bauteil zu pressen. Die Wärmespeicherleiste ist vorzugsweise auf der der Trägerplatte gegenüberliegenden Seite des zu verlötenden Bauteils angeordnet. Die Wärmespeicherleiste ermöglicht es, lokal die effektive Wärmekapazität des Bauteils zu erhöhen und auf diese Weise über die Fläche der zu verlötenden Bauteile einen definierbaren Temperaturgradienten zu schaffen oder aber einen unerwünschten Temperaturgradienten auszugleichen, der durch einen erhöhten Wärmeabfluss z.B. in Randbereichen des Bauteils bedingt ist. Beispielsweise können Wärmespeicherleisten an Randbereichen der zu verlötenden Bauteile angeordnet werden, so dass bei einem Abkühlen der Bauteile durch Kontakt mit der Basisplatte bzw. den Kontakteinheiten dieser Temperaturgradient dazu führt, dass das Lot in den Randbereichen langsamer erstarrt als in der Mitte des Bauteils, so dass während des Erstarrens noch flüssiges Lot von außen nach innen nachfließen kann, so dass die Ausbildung von Lunkern oder Rissen im Lot vermieden wird. Weiterhin können die Wärmespeicherleisten auch eine Positionierung von Lot-Preforms oder Lotdepots und/oder von weiteren Bauteilen erleichtern. Die Wärmespeicherleisten können an eine Krümmung der Grundplatte angepasst sein.

Beispielsweise kann das zu verlötende Bauteil für das Erzeugen dieses Temperaturgradienten in der vorstehend beschriebenen Weise von der Trägerplatte abgehoben werden, so dass eine Kühlung nur über die Kontakteinheiten erfolgt. Nach Unterschreiten der Solidustemperatur, bei der ein Lotmittel vollständig erstarrt ist, kann dieses Abheben rückgängig gemacht werden, so dass das Bauteil wieder vollständig auf der Trägerplatte aufliegt und dadurch der Temperaturgradient reduziert wird, so dass das Bauteil nunmehr weitgehend gleichmäßig und damit zügig weiter abgekühlt wird.

### ZEICHNUNGEN

Weitere vorteilhafte Ausführungsformen der Erfindung ergeben sich aus der Beschreibung und den Zeichnungen.

Die Erfindung wird nachfolgend anhand von Ausführungsbeispielen mit Bezug auf die Zeichnungen beschrieben. Es zeigen:
- Fig. 1: eine perspektivische Ansicht einer Basisplatte mit mehreren Kontakteinheiten gemäß einem Ausführungsbeispiel;
- Fig. 2: eine Draufsicht einer Kontakteinheit gemäß einem weiteren Ausführungsbeispiel;
- Fig. 3: eine perspektivische Schnittansicht einer Wärmeübertragungs-vorrichtung mit einer Kontakteinheit gemäß Fig. 2 mit alternativen Ausführungen einer Kontakteinheit;
- Fig. 4: eine Gruppe von Kontakteinheiten gemäß einem weiteren Ausführungsbeispiel in Seitenansicht und Draufsicht;
- Fig. 5: Detailansichten einer Kontaktfläche einer Kontakteinheit gemäß einem Ausführungsbeispiel der Erfindung;
- Fig. 6: eine Trägerplatte gemäß einem Ausführungsbeispiel der Erfindung in Draufsicht und perspektivischer Ansicht;
- Fig. 7: eine perspektivische Ansicht einer Basisplatte gemäß einem Ausführungsbeispiel der Erfindung;
- Fig. 8: eine Basisplatte gemäß einem weiteren Ausführungsbeispiel der Erfindung in perspektivischer Ansicht und Draufsicht;
- Fig. 9: ein zu verlötendes Bauteil und Wärmespeicherleisten in verschiedenen perspektivischen Ansichten;
- Fig. 10: eine Bauteilhalterung und eine Wärmeübertragungsvorrichtung gemäß einem weiteren Ausführungsbeispiel der Erfindung in Draufsicht und Schnittdarstellung; und
- Fig. 11: perspektivische Ansichten und Schnittdarstellung einer Bauteilhalterung und Wärmeübertragungsvorrichtung gemäß einem weiteren Ausführungsbeispiel der Erfindung.

Eine Wärmeübertragungsvorrichtung 10 gemäß einem Ausführungsbeispiel der vorliegenden Erfindung umfasst eine quaderförmige Basisplatte 12, welche in thermischen Kontakt mit einer Wärmequelle oder einer Wärmesenke gebracht werden kann. Auf einer Oberfläche der Basisplatte 12 sind sechs ebenfalls quaderförmige Kontakteinheiten 14 angeordnet, welche aus einem elastischen wärmeleitfähigen Material bestehen, beispielsweise aus mit Metallpartikeln versetzten Epoxidharz oder auch aus anderen thermisch leitfähigen elastomeren Werkstoffen. Die Basisplatte 12 kann mit einem nicht dargestellten Bauteilträger oder direkt mit dem Bauteil in Kontakt gebracht werden, so dass die auf der Basisplatte 12 aufgebrachten Kontakteinheiten 14 zunächst diejenigen Bereiche des Bauteilträgers kontaktieren, in denen eine hohe Lotansammlung vorhanden ist und die gezielt abgekühlt werden sollen.

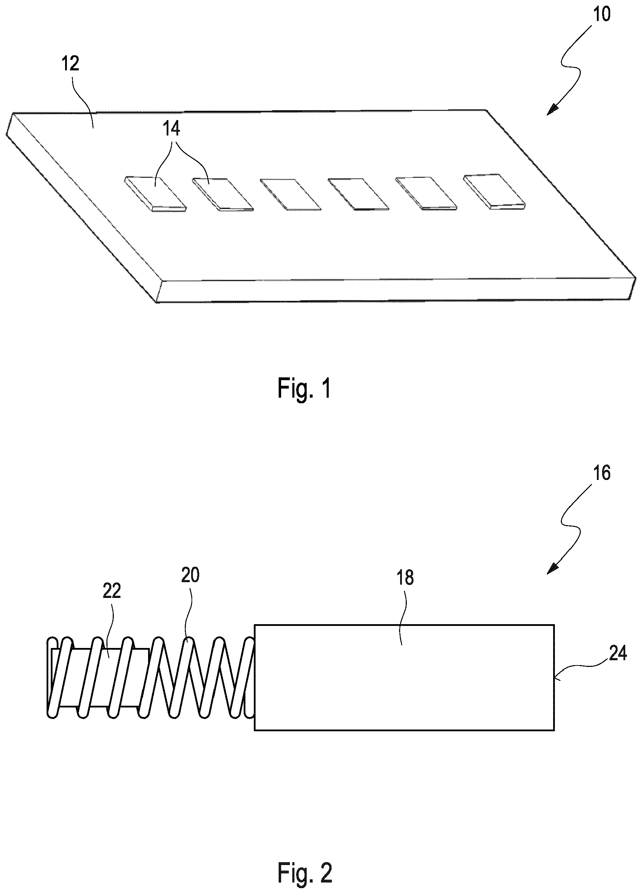

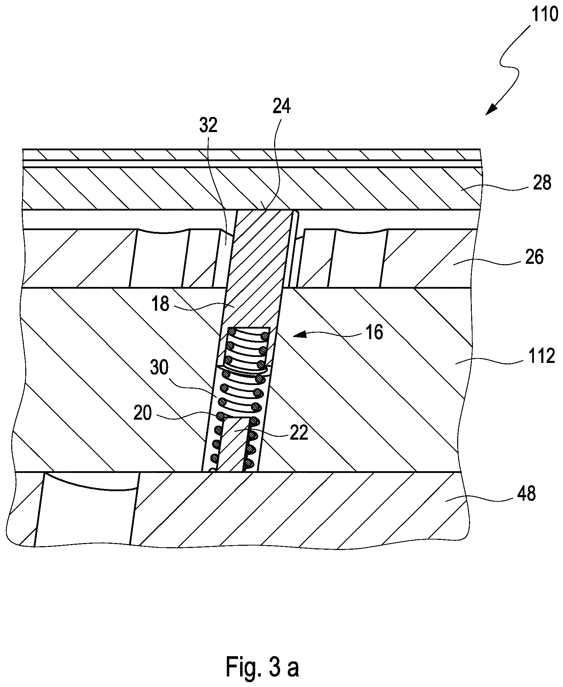

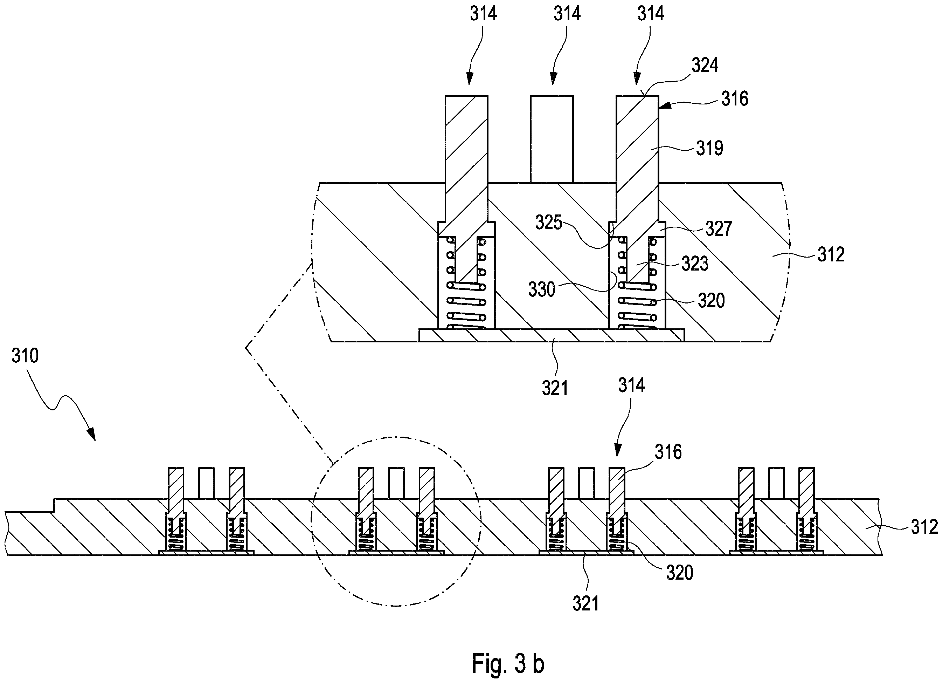

Fig. 2 zeigt ein weiteres Ausführungsbeispiel einer Kontakteinheit, welche als federnder Kontaktstift 16 nach einer Darstellung in Fig. 3a oder 3b ausgebildet sein kann. Der Kontaktstift 16 umfasst nach der Ausführungsform nach Fig. 3a eine zylindrische, einseitig geschlossene, thermisch leitfähige Hülse 18 aus Kupfer, in welcher eine Feder 20, beispielsweise eine Schraubenfeder, aufgenommen ist. Die Hülse 18 umfasst einen Vollmaterialabschnitt, der eine hohe Wärmekapazität zur Aufnahme/Abgabe und Speicherung thermischer Energie dient und einen Sacklochabschnitt zur Aufnahme einer Feder 20. Die thermische Wärmeaufnahmekapazität der Hülse 18 ist derart dimensioniert, dass diese alleine genügt, einen erforderlichen Temperaturgradienten bei Kontaktierung einer Bauteiloberfläche herzustellen. Die geschlossene Stirnfläche der Hülse 18 bildet eine Kontaktfläche 24, die mit einem zu verlötenden Bauteil in thermischen Kontakt gebracht werden kann. Die Feder 20 ragt in dem in Fig. 2 dargestellten unbeaufschlagten Zustand teilweise aus der offenen Stirnfläche der Hülse 18 heraus und steht mit der Hülse 18 in thermischem Kontakt. Im inneren der Feder 20 ist an ihrem aus der Hülse 18 herausragenden freien Ende ein thermisch leitfähiger Bolzen 22 aufgenommen, welcher ebenfalls mit der Feder 20 thermisch verbunden ist. Eine endseitige Stirnfläche des Bolzens 22 schließt bündig mit der Stirnfläche des freien Endes der Feder 20 ab.

Fig. 3a zeigt eine Wärmeübertragungsvorrichtung 110 gemäß einem weiteren Ausführungsbeispiel der Erfindung, welche mehrere Kontaktstifte 16 gemäß Fig. 2 aufweist, wobei in der Schnittdarstellung von Fig. 3a nur einer dieser Kontaktstifte 16 gezeigt ist. Die Wärmeübertragungsvorrichtung 110 umfasst eine Basisplatte 112, welche eine durchgehende Bohrung oder Ausnehmung 30 aufweist, in welcher der Kontaktstift 16 aufgenommen ist. Unterhalb der Basisplatte 112 ist eine Kühlplatte 48 als Wärmesenke vorgesehen. Anstelle der Kühlplatte 48 kann auch eine Heizplatte als Wärmequelle oder eine sonstige Platte vorgesehen sein, die wahlweise als Wärmequelle oder als Wärmesenke betrieben werden kann. Der Kontaktstift 16 stützt sich mit dem freien Ende der Feder 20 an der Kühlplatte 48 ab, wobei der Bolzen 22 in thermischem Kontakt mit der Kühlplatte 48 steht bzw. an der Kühlplatte 48 befestigt sein kann. Die Hülse 18 ragt aus der Oberseite der Basisplatte 112 heraus und erstreckt sich durch einen Durchgang 32 einer Trägerplatte 26 hindurch. Die Funktion der Trägerplatte 26 wird nachfolgend noch näher erläutert.

Die Kontaktfläche 24 der Hülse 18 steht mit einem Bauteilträger oder einer Grundplatte 28 in thermischem Kontakt, wobei auf der Grundplatte 28 weitere mit dieser zu verlötende Bauteile angeordnet sein können. Diese weiteren Bauteile können beispielsweise Halbleiterhochstrombauteile sein, die als Halb- oder Vollbrücke zur Gleichrichtung oder Wechselrichtung elektrischer Energie eingesetzt werden können. Die Halbleiterbauteile können auf einem Keramiksubstrat angeordnet sein, das eine metallisierte Oberfläche besitzt, auf denen Leiterbahnen elektrische Verbindungen herstellen.

Wie in Fig. 3a gut zu erkennen ist, kann die Hülse 18 entgegen der durch die Feder 20 ausgeübten Federkraft vollständig in die Basisplatte 112 eingefahren werden, so dass die Kontaktfläche 24 praktisch bündig mit der Oberseite der Basisplatte 112 abschließt. Der Stift 16 steht auf dem Bolzen 22 auf. Fährt die Basisplatte 112 noch näher an die Trägerplatte 26, könnten die Bauteile und die Grundplatte 28 aus der Trägerplatte 26 ausgehoben werden.

Alternativ zur Fig. 3a stellt Fig. 3b eine weitere Ausführungsform einer Wärmeübertragungsvorrichtung 310 mit einer Mehrzahl von Kontakteinheiten 314 dar. Mehrere Kontakteinheiten sind zu Gruppen zusammengefast, die sich auf einer gemeinsamen Kontaktplatte 321 abstützen. Jede Kontakteinheit 314 umfasst einen Kontaktstift 316, der einen thermisch leitfähigen Bolzen 319 umfasst. Der Bolzen 319 weist eine Kontaktfläche 324 und axial entgegengesetzt eine Federnase 323 auf. Auf der Federnase 323 ist eine Kontaktfeder 320 aufgenommen, die sich gegenüber der Kontaktplatte 321 abstützt. Der Kontaktstift 316 ist in einer Ausnehmung 330 einer Basisplatte 312 aufgenommen. Die Ausnehmung 330 weist einen radial verengten Bereich 327 in Richtung Bauteil auf, und der Bolzen 319 weist einen radialen Vorsprung 325 auf, der sich im unbeaufschlagten Zustand am Verengungsbereich 327 der Ausnehmung 330 abstützt. Somit ist der Federweg des Kontaktstifts 316 von der Lage der radialen Verengung 327 der Ausnehmung 330, der Länge der Federnase 323 und der Lage der Kontaktplatte 321 definiert. Die Kontaktplatte 321 kann thermisch mit einer unterhalb der Basisplatte 312 angeordneten Heiz- oder Kühlplatte kontaktieren. Somit kann eine thermische Entkopplung oder ein andere Temperatur der Kontakteinheit 314 gegenüber der Basisplatte 312 erreicht werden. Die Kontakteinheiten 314 können auf einer gemeinsamen Kontaktplatte 321 vormontiert und in eine Basisplatte 312 eingesetzt werden, wobei diese individuell an Lötprozesse anpassbar sind.

Die Kühlplatte 48 kann von einem Kühlmedium bzw. bei einer Ausgestaltung als Heizplatte von einem Heizmedium durchflossen werden, um den gewünschten Kühl- bzw. Heizeffekt zu bewirken. Die Heizplatte kann auch einen elektrischen Widerstandsheizleiter umfassen, und elektrisch beheizt sein. Gleichwohl kann eine Kühlplatte von einem Kühlmedium, das gasförmig oder flüssig sein kann, durchflossen werden, oder ein elektrisches Kühlelement, z.B. ein Peltierelement umfassen.

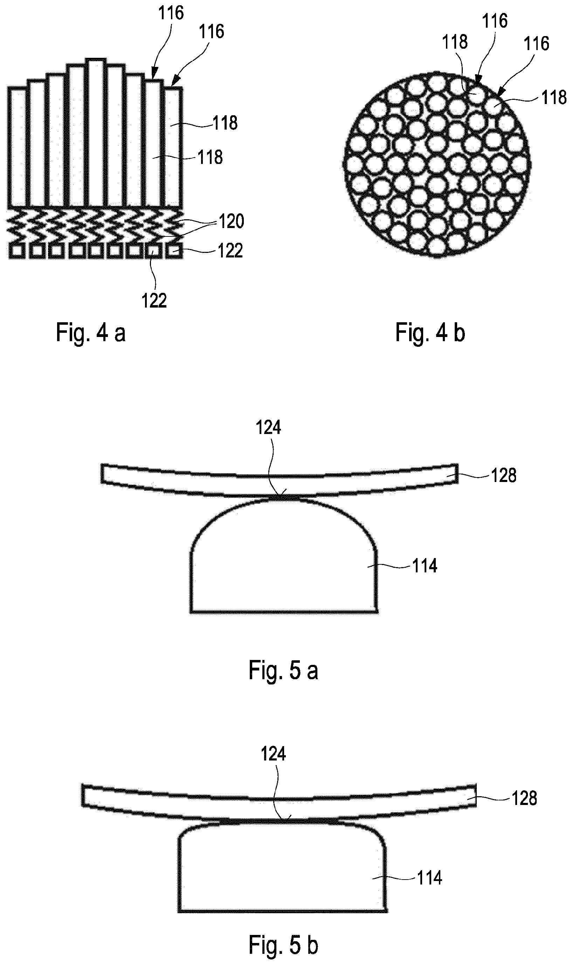

Fig. 4 zeigt gemäß einem weiteren Ausführungsbeispiel eine Gruppe von Kontakteinheiten, welche als Kontaktstifte 116 mit unterschiedlicher Länge ausgebildet sind. Die Kontaktstifte 116 entsprechen in Ihrem Aufbau den Kontaktstiften 16 von Fig. 2, wobei Hülsen 118 der Kontaktstifte 116 unterschiedliche Längen aufweisen. Die Längen der Federn 120 der Kontaktstifte 116 können an die unterschiedlichen Längen der Kontaktstifte 116 angepasst sein. An den freien, aus den Hülsen 118 herausragenden Enden der Federn 120 können thermisch leitfähige Bolzen 122 vorgesehen sein.

Die Gruppe von Kontaktstiften 116 bildet eine kreisförmige Einheit, wobei die Längen der Kontaktstifte 116 von der Kreismitte nach außen hin abnehmen, so dass die Oberseite der Gruppe von Kontaktstiften 116 eine kegelartige Kontur aufweist. Gleichwohl können die Kontaktstifte 116 gleich lang sein, und die Länge der Federn 120 entsprechend variieren. Bei einem Annähern dieser Gruppe von Kontaktstiften 116 an ein Bauteil wird zunächst ein zentraler Bereich des Bauteils kontaktiert und abgekühlt. Bei einem weiteren Annähern vergrößert sich der kontaktierte Bereich kontinuierlich. Hierdurch kann eine feinstufige Kontrolle des Temperaturgradienten vorgenommen werden, so dass eine räumlich und zeitlich präzise Abkühlung der zu verlötenden Bauteile erreicht werden kann.

Gemäß beispielhafter Abwandlungen können die Kontaktflächen 24 der Kontaktstifte 16 (Fig. 2) bzw. 116 (Fig. 4) insbesondere elastisch und/oder gekrümmt ausgebildet sein.

In Fig. 5 ist eine Kontakteinheit 114 gemäß einem weiteren Ausführungsbeispiel dargestellt, die ähnlich wie die Kontakteinheiten 14 der Wärmeübertragungsvorrichtung von Fig. 1 auf einer Basisplatte (nicht dargestellt) angeordnet sein kann. Die Kontakteinheit 114 besteht aus einem elastischen, wärmeleitfähigen Material und weist eine im unbeaufschlagten Zustand elliptisch ausgeformte Kontaktfläche 124 auf. Durch Annäherung der Basisplatte an einen Bauteilträger oder eine Grundplatte 128 gelangt zunächst nur ein geringer Bereich einer Kontaktfläche 124 der Kontakteinheit 114 mit der Grundplatte 128 in thermischen Kontakt. Bei weiterer Annäherung verformt sich die Kontakteinheit 114, so dass sich der in Kontakt mit der Grundplatte 128 stehende Bereich der Kontaktfläche 124 kontinuierlich vergrößert.

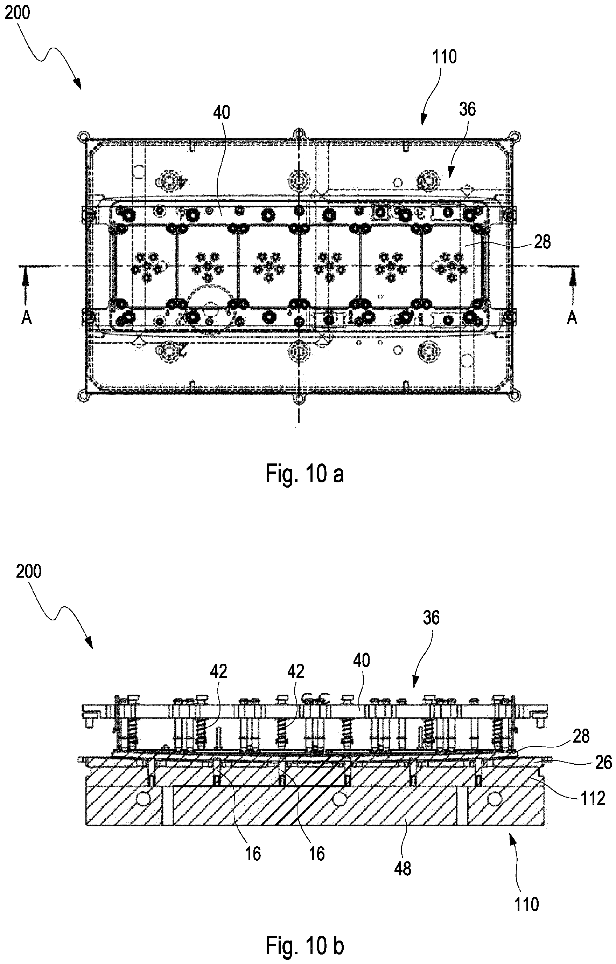

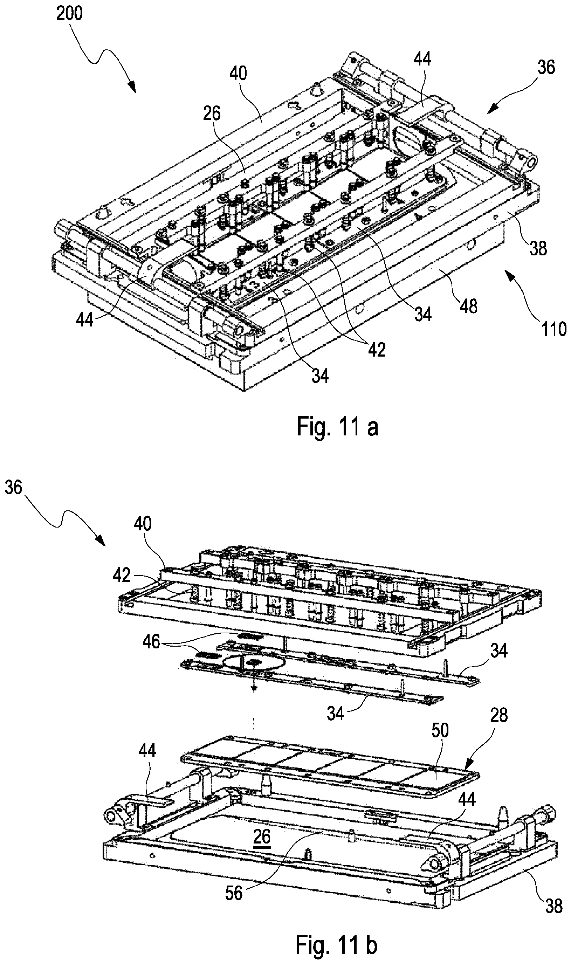

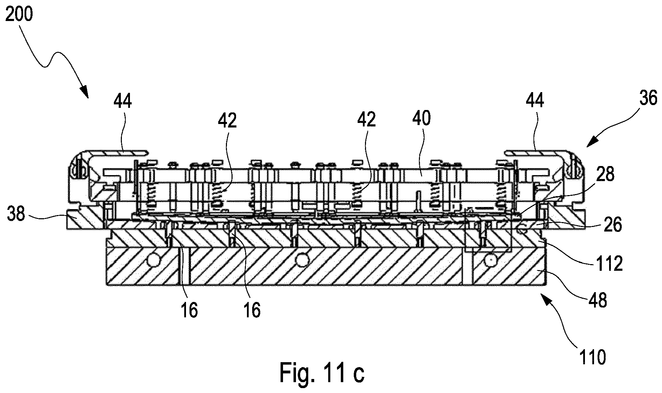

Mit Bezug auf Fig. 10 und 11 wird nachfolgend eine Lötvorrichtung 200 gemäß einem Ausführungsbeispiel der vorliegenden Erfindung beschrieben. Die Lötvorrichtung 200 umfasst eine Wärmeübertragungsvorrichtungen 110 (siehe Fig. 3a oder Fig. 3b) sowie eine Bauteilhalterung 36, in welcher die zu verlötenden Bauteile fixiert werden können. Die zu verlötenden Bauteile umfassen eine Grundplatte 28 als Bauteilträger sowie weitere Bauteile 46, die mit der Grundplatte 28 verlötet werden sollen. Die Grundplatte 28 weist sechs in Reihe angeordnete Lötfelder 50 auf, auf denen die Bauteile 46 angeordnet werden. Zwischen den Bauteilen 46 und der Grundplatte 28 kann Lot, beispielsweise in Form von Lotpaste oder mittels Lotstanzelementen, sogenannten Lot-Preforms in einem flussmittelfreien Prozess vorgesehen werden. Alternativ kann anstelle der Grundplatte 28 ein Tragrahmen 38 mit integrierter kleinflächigen Aufnahmen für die zu verlötenden Bauteilen bzw. mit entsprechend kleinteiligen Grundplatten eingesetzt werden, oder die Grundplatte 28 bzw. mehrere Grundplatten können mittels Stifte an einen Pressrahmen 40 gehängt, d.h. frei schwebend positioniert sein.

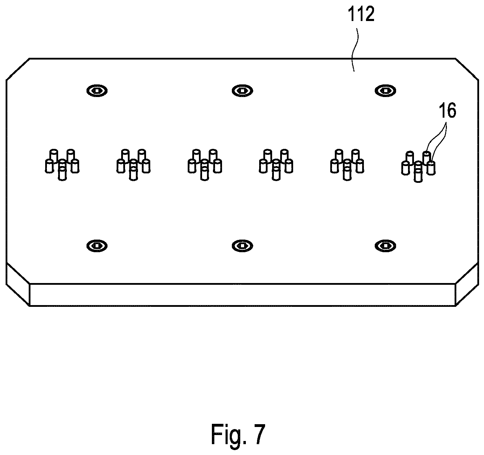

In Fig. 7 ist die Basisplatte 112 der Wärmeübertragungsvorrichtung 110 dargestellt. Die Basisplatte 112 weist sechs Gruppen von Kontaktstiften 16 auf, wobei jede Gruppe sechs konzentrisch angeordnete Kontaktstifte 16 umfasst. Die Anordnung der Gruppen von Kontaktstiften 16 ist auf die Anordnung der Lötfelder 50 der Grundplatte 28 abgestimmt.

Die Bauteilhalterung 36 umfasst einen Tragrahmen 38, in dem die Trägerplatte 26 gehalten ist. Die Grundplatte 28 liegt auf der Trägerplatte 26 auf. Die Bauteilhalterung 36 umfasst ferner einen Pressrahmen 40, welcher eine Vielzahl von federnd gelagerten Druckstiften 42 umfasst. Der Pressrahmen 40 kann mithilfe von am Tragrahmen 38 angeordneten Verriegelungen 44 am Tragrahmen 38 festgelegt werden.

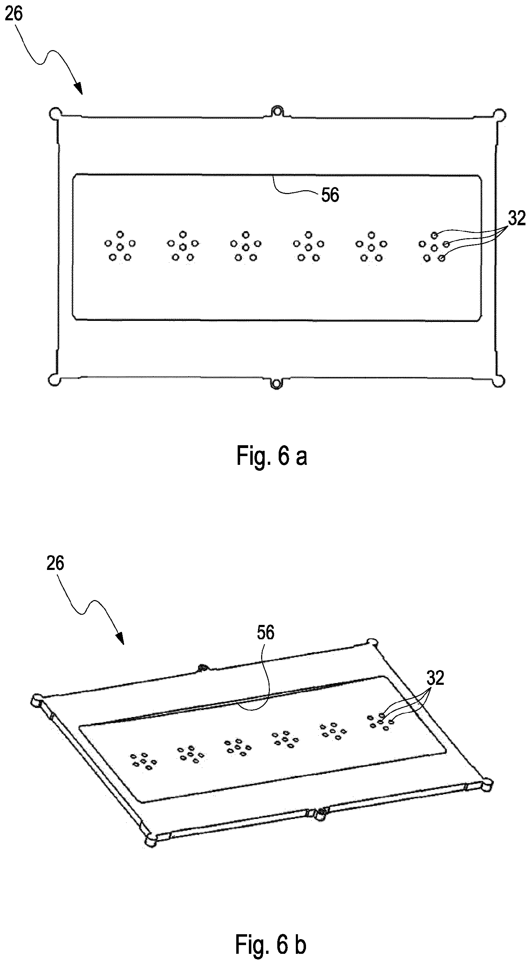

Wie insbesondere in Fig. 6 zu erkennen ist, weist die Trägerplatte 26 Durchgänge 32 auf, die zu den Kontaktstiften 16 ausgerichtet sind, so dass die Kontaktstifte 16 durch diese Durchgänge 32 der Trägerplatte 26 hindurch in thermischen Kontakt mit der Grundplatte 28 treten können.

An Randbereichen der Grundplatte 28 können Wärmespeicherleisten 34 angeordnet werden, welche durchgehend oder - wie dargestellt - geteilt sein können. Die Wärmespeicherleisten 34 weisen Passstifte 52 und Passbohrungen 54 auf, welche der Ausrichtung bzw. Befestigung der Wärmespeicherleisten 34 an der Grundplatte 28 bzw. dem Pressrahmen 40 dienen. Die Wärmespeicherleisten 34 dienen einer lokalen Erhöhung der Wärmespeicherkapazität und bewirken dadurch einen Ausgleich eines erhöhten Temperaturverlusts der Grundplatte 28 an ihren Randbereichen bzw. die Ausbildung eines Temperaturgradienten über die Grundplatte 28, so dass die Randbereiche langsamer abkühlen. Aufgrund dieses Temperaturgradienten kühlt während des Abkühlprozesses das zunächst noch flüssige Lot zuerst in der Mitte der Grundplatte 28 ab und erstarrt, während das Lot in weiter außen liegenden Bereich noch flüssig ist und von dort nach innen nachfließen kann, um die Ausbildung von Lunkern oder Rissen zu verhindern. Zum Ende des Abkühlprozesses hat auch das Lot in den Randbereichen der Grundplatte 28 seinen Erstarrungspunkt erreicht.

Wie insbesondere in Fig. 10b und 11c gut zu erkennen ist, ist die Grundplatte 28 vorgekrümmt, um durch den Lötvorgang bedingte Spannungen zu kompensieren. Es wird angestrebt, dass die Grundplatte 28 nach Abschluss des Lötvorgangs und erfolgter Abkühlung plan ist, was durch einen unterschiedlichen Wärmeausdehnungskoeffizient der zu verlötenden Bauteile erreicht wird, die sich beim Abkühlen aus der gebogenen Form ähnlich einem Bimetall in eine plane Ausrichtung verziehen.

Um einen guten thermischen Kontakt zwischen der Trägerplatte 26 und der Grundplatte 28 zu gewährleisten, ist die Trägerplatte 26 mit einer gewölbten Ausfräsung oder Ausnehmung 56 versehen, deren Krümmung komplementär zu der Krümmung der Platte 28 ausgebildet ist (siehe insbesondere Fig. 6a und 11b). Die der Ausnehmung 56 gegenüberliegende Seite der Trägerplatte 26 ist ebenso wie die Oberseite der Basisplatte 112 vorzugsweise plan, um einen flächigen Kontakt zwischen diesen Platten zu gewährleisten.

Wenn die Grundplatte 28 in die Bauteilhalterung 36 eingelegt ist und der Pressrahmen 40 mittels der Verriegelungen 44 an dem Tragrahmen 38 festgelegt ist, wird die Grundplatte 28 mittels der Druckstifte 42 gegen die Trägerplatte 26 gepresst, wobei die Presskraft zumindest teilweise indirekt über die Bauteile 46 und die Wärmespeicherleisten 34 übertragen wird, welche somit auch an die Grundplatte 28 gepresst werden.

Beim Annähern der Wärmeübertragungsvorrichtung 110 an die Trägerplatte 26 treten zunächst nur die Kontaktstifte 16 mit der Grundplatte 28 in thermischen Kontakt, so dass eine lokale Abkühlung im Bereich der Kontaktstifte 16 erzielt wird. Bei weiterer Annäherung verringert sich der Abstand zwischen den Kontaktflächen 24 der Kontaktstifte 16 und der Basisplatte 112, so dass schließlich die Kontaktstifte 16 weitgehend in den Ausnehmungen 30 der Basisplatte 112 aufgenommen sind und schließlich ein flächiger Kontakt zwischen der Wärmeübertragungsvorrichtung 110 und der Trägerplatte 26 damit auch mit der in thermischem Kontakt mit der Trägerplatte 26 stehenden Grundplatte 28 hergestellt wird, um eine großflächige Abkühlung der Grundplatte 28 zu bewirken. Beim Annähern der Wärmeübertragungsvorrichtung 110 an die Trägerplatte 26 kann ein Ausheben der Grundplatte 28 aus der Trägerplatte 26 erfolgen.

Um den thermischen Kontakt zwischen der Trägerplatte 26 und der Grundplatte 28 zu unterbrechen, ist es möglich, die Verriegelungen 44 teilweise oder vollständig zu lösen, so dass die durch die Druckstifte 42 ausgeübte Presskraft reduziert oder sogar aufgehoben wird. Alternativ kann die Druckkraft der Druckstifte 42 derart gewählt sein, dass beim Annähern der Wärmeübertragungsvorrichtung 110 an die Trägerplatte 26 die Grundplatte 28 ausgehoben wird, sobald die Kontaktstifte 16 vollständig eingefahren sind und die Basisplatte 112 weiter gegen die Trägerplatte 26 gefahren wird. Bei Annäherung der Wärmeübertragungsvorrichtung 110 an die Bauteilhalterung 36 wird die Grundplatte 28 durch die Kontaktstifte 16 von der Trägerplatte 26 abgehoben, da nunmehr die Gegenkraft, welche die Federn 20 der Kontaktstifte 16 komprimiert, fehlt oder zumindest so gering ist, dass die Kontaktstifte 16 nicht oder nur noch geringfügig in die Ausnehmungen 30 eintauchen. Durch den fehlenden thermischen Kontakt der Grundplatte 28 mit der Trägerplatte 26 ist eine noch gezieltere Abkühlung bzw. ein steilerer Temperaturgradient im Bereich der von den Kontaktstiften 16 kontaktierten Stellen möglich.

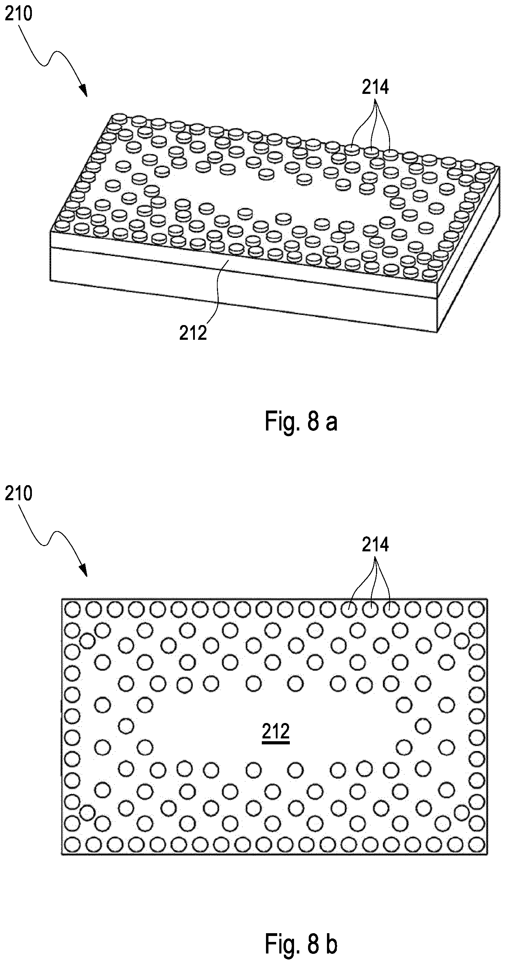

Fig. 8 zeigt eine Wärmeübertragungsvorrichtung 210 gemäß einem weiteren Ausführungsbeispiel der Erfindung. Die Wärmeübertragungsvorrichtung 210 umfasst eine quaderförmige Basisplatte 212, an deren Oberseite eine Vielzahl von schematisch dargestellten Kontakteinheiten 214 angeordnet ist. Die Kontakteinheiten 214 können den Kontaktstiften 16 (Fig. 2 und 3) oder den aus elastischem Material gebildeten Kontakteinheiten 114 (Fig. 5) entsprechen. Die Flächendichte, mit welcher die Kontakteinheiten 214 auf der Basisplatte 212 angeordnet sind, ist entlang den Rändern der Basisplatte 212 maximal und nimmt nach innen hin ab d.h. der Abstand der Kontakteinheiten 214 zueinander vergrößert sich von außen nach innen. Ein innerer Bereich der Basisplatte 212 ist frei von Kontakteinheiten 214.

Eine derartige Wärmeübertragungsvorrichtung 210 kann vorteilhafterweise als Heizplatte oder Wärmequelle eingesetzt werden, um während des Aufwärmvorgangs einen Temperaturgradienten auf einer mit der Wärmeübertragungsvorrichtung 210 in thermischem Kontakt stehenden Grundplatte (nicht dargestellt) zu verhindern. Hierbei ist die Zielsetzung, einen natürlich vorkommenden Temperaturgradienten zu verhindern. Ein erwärmter Körper in kälterer Umgebung ist an Randbereichen der Regel kälter als in der Mitte, in diesem Fall die Ränder der Trägerplatte 26 oder Grundplatte 28. Durch die höhere Wärmeübertragung am Rand kann diesem Temperaturabfall entgegengewirkt werden und somit eine höhere Homogenität der Wärmeverteilung beim Heizen erreicht werden. Auf den Kühlprozess hat dies in der Regel wenig Einfluss.

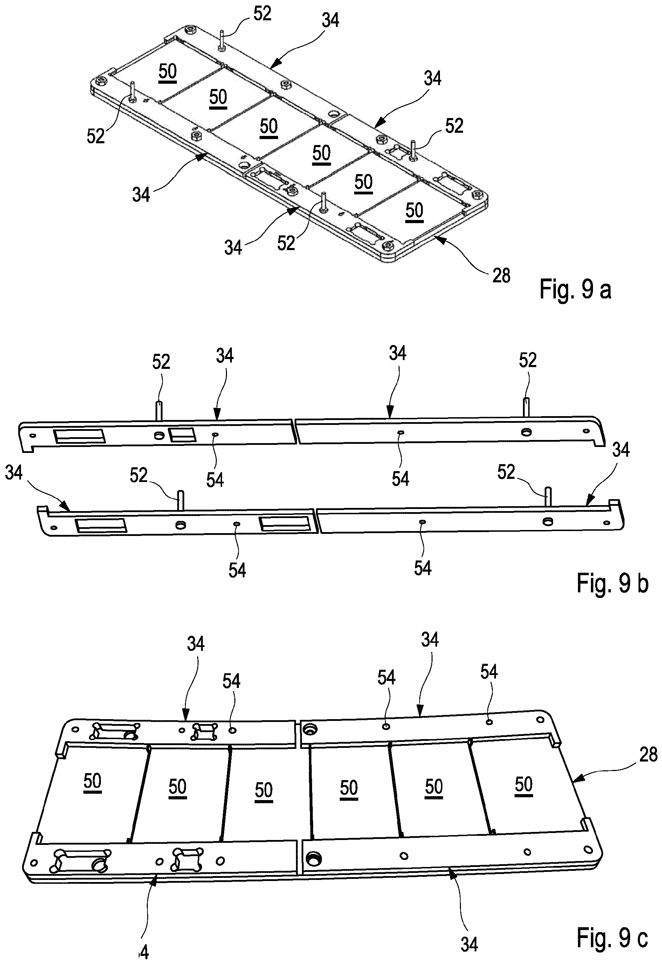

Bei einem Abkühlen einer mit Wärmespeicherleisten 34 versehenen Grundplatte 28 (Fig. 9) mit einer Wärmeübertragungsvorrichtung 10 gemäß Fig. 1 können die sechs rechteckförmigen Kontakteinheiten 14 zentrale Bereiche der Grundplatte 28 kontaktieren, wobei auf der Grundplatte angeordnete Bauteile durch die am Rand angeordnete Wärmespeicherleisten 34 mit dem der Grundplatte 28 verbunden sind. Bei einer anfänglichen Temperatur von ca. 280°C kann durch die selektive Kühlung im Bereich der Kontakteinheiten 14 eine Abkühlung bis auf ca. 200°C erreicht werden, wobei in den Außenbereichen und insbesondere an den Wärmespeicherleisten 34 weiterhin eine Temperatur von ca.5°C bis 20°C höher herrscht. Nach einer geraumen Zeit haben sich die einzelnen Bauteile auf eine Temperatur unterhalb von 100°C abgekühlt, während die Randbereiche, insbesondere die Wärmespeicherleisten 34, noch eine deutlich höhere Temperatur aufweisen können. In diesem Temperaturbereich ist die Steuerung des Gradienten nicht mehr wesentlich, zudem sinkt der Temperaturunterschied zwischen den Mitten- und Randbereichen mit absinkender Absoluttemperatur. Hierdurch wird erreicht, dass Lotverbindungen von innen heraus nach außen abkühlen und erstarren, und somit keine mechanischen Spannungen auftreten können und entstehende Lunker oder Risse durch Nachfließen von äußerem, noch warmem Lot aufgefüllt werden. Hierdurch kann eine deutlich verbesserte Qualität der Lotverbindungen erreicht werden.

Es erscheint vorteilhaft, dass zur Erwärmung Kontakteinheiten 214 eingesetzt werden, die am Rand der zu erwärmenden Bauteile bzw. der Grundplatte 28, 128 angeordnet sind. Zur Kühlung können Kontakteinheiten 14, 114 bzw. Kontaktstifte 16, 116 an den zentralen, Iotbenetzten Bereichen der Bauteile bzw. der Grundplatte 28 angeordnet sein.

Vorteilhafterweise können die Kontakteinheiten 214 der Basisplatte 212 für die Erwärmung und die Kontakteinheiten 14, 114 bzw. Kontaktstifte 16, 116 der Basisplatte 12, 112 für das Abkühlen bezüglich des Bauteils bzw. der Grundplatte 28, 128 komplementär angeordnet sein.

### Bezugszeichenliste

- 10, 110, 210, 310: Wärmeübertragungsvorrichtung
- 12, 112, 212. 312: Basisplatte
- 14, 114, 214, 314: Kontakteinheit
- 16, 116, 316: Kontaktstift
- 18, 118: Hülse
- 319: Bolzen
- 20, 120, 320: Feder
- 321: Kontaktplatte
- 22, 122: Bolzen
- 323: Federnase
- 24, 124, 324: Kontaktfläche
- 325: radialer Bolzenvorsprung
- 26: Trägerplatte
- 327: radiale Ausnehmungsverengung
- 28, 128: Grundplatte
- 30, 330: Ausnehmung
- 32: Durchgang
- 34: Wärmespeicherleiste
- 36: Bauteilhalterung
- 38: Tragrahmen
- 40: Pressrahmen
- 42: Druckstift
- 44: Verriegelung
- 46: Bauteil
- 48: Kühlplatte
- 50: Lötfeld
- 52: Passstift
- 54: Passbohrung
- 56: Ausnehmung
- 200: Lötvorrichtung

## Patentansprüche

1. Wärmeübertragungsvorrichtung (10, 110, 210) zum thermischen Koppeln eines zu verlötenden Bauteils (28,128) mit einer Wärmequelle und/oder einer Wärmesenke (48) in einer Lötvorrichtung (200), insbesondere in einer Vakuum- Lötvorrichtung, mit einer Wärmequelle und/oder einer Wärmesenke (48) und mit zumindest einer Basisplatte (12, 112, 212), weiche in thermisch leitendem Kontakt zumindest mit der Wärmequelle und/oder der Wärmesenke (48) steht,
wobei die Basisplatte (12, 112, 212) zumindest zwei, insbesondere mehrere, eine jeweilige Kontaktfläche (24, 124) aufweisende Kontakteinheiten (14, 114, 214) aufweist, wobei die Kontaktflächen (24, 124) mit dem Bauteil (28,128) thermisch kontaktierbar sind, wobei die Kontakteinheiten (14, 114, 214) derart ausgebildet sind, dass die relativen Abstände zwischen den Kontaktflächen (24, 124) und der dem Bauteil (28,128) zugewandten Oberfläche der Basisplatte (12, 112, 212) veränderbar sind, und wobei der Abstand zwischen der Basisplatte (12, 112, 212) und dem Bauteil (28,128) veränderbar ist,
**dadurch gekennzeichnet,**
und dass die Kontakteinheiten (14, 114, 214) derart ausgebildet sind, dass die relativen Abstände zwischen den Kontaktflächen (24, 124) und der dem Bauteil (28,128) zugewandten Oberfläche der Basisplatte (12, 112, 212) in Abhängigkeit von einer durch eine Änderung des Abstandes zwischen der Basisplatte (12, 112, 212) und dem Bauteil (28,128) verursachten Änderung des Anpressdrucks, mit welchem die Basisplatte (12, 112, 212) gegen das Bauteil (28,128) gepresst wird, veränderbar sind.

2. Wärmeübertragungsvorrichtung (10, 110, 210) nach Anspruch 1,
**dadurch gekennzeichnet,**
**dass** die Kontakteinheiten (14, 114, 214) versetzbar in Ausnehmungen (30), welche in der Basisplatte (12, 112, 212) vorgesehen sind, aufgenommen sind, wobei insbesondere die Kontakteinheiten (14, 114, 214) in eine Einfahrposition versetzt werden können, in welcher die Kontaktflächen der Kontakteinheiten (14, 114, 214) bündig mit der dem Bauteil (28,128) zugewandten Oberfläche der Basisplatte (12, 112, 212) sind.

3. Wärmeübertragungsvorrichtung (10, 110, 210) nach einem der vorhergehenden Ansprüche,
**dadurch gekennzeichnet,**
**dass** die Kontakteinheiten (14, 114) aus einem an der dem zu verlötenden Bauteil (128) zugewandten Seite der Basisplatte (12) vorgesehenen elastischen, wärmeleitfähigen Material, insbesondere einer Metallpaste, einem mit Metallpartikeln versetzten Epoxidharz und/oder einem leitfähigen elastomeren Werkstoff, gebildet sind.

4. Wärmeübertragungsvorrichtung (10, 110, 210) nach einem der vorhergehenden Ansprüche,
**dadurch gekennzeichnet,**
**dass** eine jeweilige Kontakteinheit (214) einen relativ zu der Basisplatte (112, 212) verstellbaren, die Kontaktfläche (24) aufweisenden Kontaktstift (16, 116) umfasst.

5. Wärmeübertragungsvorrichtung (10, 110, 210) nach Anspruch 4,
**dadurch gekennzeichnet,**
**dass** auf einer Stirnfläche des Kontaktstifts (16, 116) ein elastisches, wärmeleitfähiges Material, insbesondere ein mit Metallpartikeln versetztes Epoxidharz und/oder ein leitfähiger elastomerer Werkstoff, aufgebracht ist.

6. Wärmeübertragungsvorrichtung (10, 110, 210) nach Anspruch 4 oder 5,
**dadurch gekennzeichnet,**
**dass** die Kontaktstifte (16, 116) federnd gelagert sind.

7. Wärmeübertragungsvorrichtung (10, 110, 210) nach Anspruch 6,
**dadurch gekennzeichnet,**
**dass** ein jeweiliger Kontaktstift (16, 116) eine einseitig geschlossene, thermisch leitfähige Hülse (18, 118) aufweist, deren geschlossene Stirnfläche dem zu verlötenden Bauteil (28,128) zugewandt ist, und dass in der Hülse eine Feder (20, 120), insbesondere Schraubenfeder, aufgenommen ist, welche zumindest in unbeaufschlagtem Zustand teilweise aus der offenen Stirnfläche der Hülse (18, 118) herausragt und mit der Hülse (18, 118) thermisch verbunden ist, wobei insbesondere in einem Inneren der Feder (20, 120) an ihrem aus der Hülse (18, 118) herausragenden, freien Ende ein thermisch leitfähiger Bolzen (22, 122) aufgenommen ist, welcher mit der Feder (20, 120) thermisch verbunden ist, wobei vorteilhafterweise eine endseitige Stirnfläche des Bolzens (22, 122) bündig mit der Stirnfläche des freien Endes der Feder (20, 122) abschließt oder aus der Feder hervorsteht,
oder dass ein jeweiliger Kontaktstift (316) einen thermisch leitfähigen Bolzen (319) aufweist, deren Stirnfläche dem zu verlötenden Bauteil (28,128) zugewandt ist, und dass am Bolzen (319) eine Feder (320), insbesondere Schraubenfeder an einer Federnase (323) des Bolzens (319) aufgenommen ist, wobei insbesondere sich die Feder (320) an ihrer, der Federnase (323) abgewandten Seite auf einer Kontaktplatte (321) bevorzugt gemeinsam mit anderen Kontaktstiften (316) abstützt, und wobei der Bolzen (319) am Sitz der Federnase (323) einen radialen Vorsprung (325) aufweist, der sich im unbeaufschlagten Zustand der Feder (320) an einer radialen Verengung der Ausnehmung (330) der Basisplatte (312) abstützt.

8. Wärmeübertragungsvorrichtung (10, 110, 210) nach einem der vorhergehenden Ansprüche,
**dadurch gekennzeichnet,**
**dass** die Kontaktstifte (16, 116) mechanisch, pneumatisch, hydraulisch oder elektromagnetisch verstellbar sind.

9. Wärmeübertragungsvorrichtung (10, 110, 210) nach einem der Ansprüche 4 bis 8,
**dadurch gekennzeichnet,**
**dass** die Kontaktstifte (116) in wenigstens einer, jeweils mehrere Kontaktstifte (116) umfassenden Gruppe angeordnet sind, wobei in einem unbeaufschlagten Zustand insbesondere die Abstände der Kontaktflächen der Kontaktstifte (116) einer Gruppe zu der Basisplatte bezogen auf die Position der Kontaktstifte (116) in der Gruppe von innen nach außen abnehmen.

10. Wärmeübertragungsvorrichtung (10, 110, 210) nach einem der vorhergehenden Ansprüche,
**dadurch gekennzeichnet,**
**dass** die Basisplatte (12, 112, 212) an ihrer dem zu verlötenden Bauteil (28,128) zugewandten Seite gekrümmt ist und insbesondere formkomplementär zu dem zu verlötenden Bauteil (28,128) ausgebildet ist.

11. Lötvorrichtung (200), insbesondere Vakuum-Lötvorrichtung, mit zumindest einer Wärmeübertragungsvorrichtung (10, 110, 210) nach einem der vorangegangenen Ansprüche und mit einer Bauteilhalterung (36), in welcher zumindest ein zu verlötendes Bauteil (28,128) fixierbar ist,
**dadurch gekennzeichnet,**
**dass** die Bauteilhalterung (26) und die Basisplatte (12, 112, 212) derart relativ zueinander versetzbar sind, dass hierdurch wahlweise die Kontaktflächen der Kontakteinheiten (14, 114, 214) mit dem zu verlötenden Bauteil (28,128) thermisch leitend kontaktierbar sind und die relativen Abstände zwischen den Kontaktflächen (24, 124) und der dem Bauteil (28,128) zugewandten Oberfläche der Basisplatte (12, 112, 212) veränderbar sind.

12. Lötvorrichtung (200) nach Anspruch 11,
**dadurch gekennzeichnet,**
**dass** die Bauteilhalterung (36) eine Trägerplatte (26) als Auflage für das zu verlötende Bauteil (28,128) und eine Presseinrichtung umfasst, welche dazu ausgelegt ist, zumindest das zu verlötende Bauteil (28,128) insbesondere federbelastet an die Trägerplatte (26) zu pressen, wobei die Trägerplatte (26) zumindest einen Durchgang (32) zum Durchführen der Kontakteinheiten (14, 114, 214) aufweist, um thermischen Kontakt zwischen den Kontaktflächen (24, 124) der Kontakteinheiten (14, 114, 214) und dem zu verlötenden Bauteil (28,128) herzustellen.

13. Lötvorrichtung (200) nach Anspruch 11 oder 12,
**dadurch gekennzeichnet,**
**dass** die Bauteilhalterung (36) und die Basisplatte (12, 112, 212) relativ zueinander versetzbar sind, wobei die Bauteilhalterung (36) und/oder die Wärmeübertragungsvorrichtung (10, 110, 210) derart ausgestaltet sind, dass bei einer Annäherung zwischen der Bauteilhalterung (36) und der Basisplatte (12, 112, 212) über die Kontakteinheiten (14, 114, 214) eine Kraft auf das zu verlötende Bauteil (28,128) ausgeübt wird, so dass das zu verlötende Bauteil (28,128) von der Trägerplatte (26) abgehoben wird.

14. Lötvorrichtung (200) nach einem der Ansprüche 11 bis 13,
**dadurch gekennzeichnet,**
**dass** die Bauteilhalterung (36) zumindest eine Wärmespeicherleiste (34) aufweist, welche mit dem zu verlötenden Bauteil (28,128), insbesondere einem Randbereich des Bauteils (28,128), thermisch leitend kontaktierbar ist, wobei insbesondere die Presseinrichtung dazu ausgebildet ist, die Wärmespeicherleiste (34) federbelastet an das zu verlötende Bauteil (28,128) zu pressen.

## Claims

1. Heat transmission device (10, 110, 210) for thermal coupling of a component (28, 128) to be soldered to a heat source and/or a heat sink (48) in a soldering device (200), in particular in a vacuum soldering device, with a heat source and/or a heat sink (48) and with at least one base plate (12, 112, 212) which is in thermally conductive contact at least with the heat source and/or the heat sink (48),
where the base plate (12, 112, 212) has at least two, in particular several, contact units (14, 114, 214) having a respective contact surface (24, 124), where said contact surfaces (24, 124) are thermally contactable with the component (28, 128), where the contact units (14, 114, 214) are designed such that the relative distances between the contact surfaces (24, 124) and that surface of the base plate (12, 112, 212) facing the component (28, 128) are variable, and where the distance between the base plate (12, 112, 212) and the component (28, 128) is variable,
**characterized in**
**that** the contact units (14, 114, 214) are designed such that the relative distances between the contact surfaces (24, 124) and that surface of the base plate (12, 112, 212) facing the component (28, 128) are variable depending on a change, caused by a change in the distance between the base plate (12, 112, 212) and the component (28, 128), in the contact pressure at which the base plate (12, 112, 212) is pressed against the component (28, 128).

2. Heat transmission device (10, 110, 210) according to claim 1,
**characterized in**
**that** the contact units (14, 114, 214) are held movably in recesses (30) provided in the base plate (12, 112, 212), where in particular the contact units (14, 114, 214) can be moved into an insertion position in which the contact surfaces of the contact units (14, 114, 214) are flush with that surface of the base plate (12, 112, 212) facing the component (28, 128).

3. Heat transmission device (10, 110, 210) according to one of the preceding claims,
**characterized in**
**that** the contact units (14, 114) are formed from an elastic, thermally conductive material provided on that side of the base plate (12) facing the component (128) to be soldered, in particular from a metal paste, an epoxy resin with admixed metal particles and/or a conductive elastomer material.

4. Heat transmission device (10, 110, 210) according to one of the preceding claims,
**characterized in**
**that** a respective contact unit (214) comprises a contact pin (16, 116) having the contact surface (24) and adjustable relative to the base plate (112, 212).

5. Heat transmission device (10, 110, 210) according to claim 4,
**characterized in that**
that an elastic and thermally conductive material, in particular an epoxy resin with admixed metal particles and/or a conductive elastomer material, is applied to an end face of the contact pin (16, 116).

6. Heat transmission device (10, 110, 210) according to claim 4 or 5,
**characterized in**
**that** the contact pins (16, 116) are spring-mounted.

7. Heat transmission device (10, 110, 210) according to claim 6,
**characterized in**
**that** a respective contact pin (16, 116) has a thermally conductive sleeve (18, 118) closed on one side and whose closed end face faces the component (28, 128) to be soldered, and that a spring (20, 120), in particular a helical spring, is held in the sleeve and at least in the unloaded state partially protrudes from the open end face of the sleeve (18, 118) and is thermally connected to the sleeve (18, 118), where in particular in an interior of the spring (20, 120) at its free end protruding from the sleeve (18, 118) a thermally conductive bolt (22, 122) is held which is thermally connected to the spring (20, 120), where advantageously an end face of the bolt (22, 122) on the end side is flush with the end face of the free end of the spring (20, 122) or protrudes from the spring,
or that a respective contact pin (316) has a thermally conductive bolt (319) whose end face faces the component (28, 128) to be soldered, and that on the bolt (319) a spring (320), in particular a helical spring, is held on a spring nose (323) of the bolt (319), where in particular the spring (320) rests on its side opposite the spring nose (323) on a contact plate (321) preferably jointly with other contact pins (316), and where the bolt (319) has a radial projection (325) at the base of the spring nose (323) which in the unloaded state of the spring (320) rests on a radially narrowed area of the recess (330) of the base plate (312).

8. Heat transmission device (10, 110, 210) according to one of the preceding claims,
**characterized in**
**that** the contact pins (16, 116) are adjustable mechanically, pneumatically, hydraulically or electromagnetically.

9. Heat transmission device (10, 110, 210) according to one of claims 4 to 8,
**characterized in**
**that** the contact pins (116) are arranged in at least one group, each comprising several contact pins (116), where in an unloaded state in particular the distances between the contact surfaces of the contact pins (116) of a group decrease from the inside outwards towards the base plate relative to the position of the contact pins (116) in the group.

10. Heat transmission device (10, 110, 210) according to one of the preceding claims,
**characterized in that**
that the base plate (12, 112, 212) is curved on its side facing the component (28, 128) to be soldered and in particular is designed to complement the shape of the component (28, 128) to be soldered.

11. Soldering device (200), in particular vacuum soldering device, with at least one heat transmission device (10, 110, 210) according to one of the preceding claims and with a component holder (36) in which at least one component (28, 128) to be soldered is fixable,
**characterized in**
**that** the component holder (36) and the base plate (12, 112, 212) are movable relatively to one another such that the contact surfaces of the contact units (14, 114, 214) are selectably contactable in thermally conductive manner to the component (28, 128) to be soldered and the relative distances between the contact surfaces (24, 124) and that surface of the base plate (12, 112, 212) facing the component (28, 128) are variable.

12. Soldering device (200) according to claim 11,
**characterized in**
**that** the component holder (36) comprises a carrier plate (26) as a support for the component (28, 128) to be soldered and a pressing device which is designed to press at least the component (28, 128) to be soldered in particular under spring load against the carrier plate (26), where said carrier plate (26) has at least one passage (32) for passing through of contact units (14, 114, 214), to create a thermal contact between the contact surfaces (24, 124) of the contact units (14, 114, 214) and the component (28, 128) to be soldered.

13. Soldering device (200) according to claim 11 or 12,
**characterized in**
**that** the component holder (36) and the base plate (12, 112, 212) are movable relatively to one another, where said component holder (36) and/or the heat transmission device (10, 110, 210) are designed such that during an approach between the component holder (36) and the base plate (12, 112, 212) a force is applied to the component (28, 128) to be soldered via the contact units (14, 114, 214) such that the component (28, 128) to be soldered is lifted off the carrier plate (26).

14. Soldering device (200) according to one of claims 11 to 13,
**characterized in**
**that** the component holder (36) has at least one heat reservoir strip (34) which is contactable in thermally conductive manner with the component (28, 128) to be soldered, in particular with an edge region of the component (28, 128), where in particular the pressing device is designed to press the heat reservoir strip (34) under spring load against the component (28, 128) to be soldered.

## Revendications

1. Dispositif de transfert de chaleur (10, 110, 210) pour le couplage thermique d'un composant à braser (28, 128) avec une source de chaleur et/ou un dissipateur thermique (48) dans un dispositif de brasage (200), notamment dans un dispositif de brasage sous vide, avec une source de chaleur et/ou un dissipateur thermique (48) et au moins une plaque de base (12, 112, 212) qui est en contact thermoconducteur avec au moins la source de chaleur et/ou le dissipateur thermique (48),
sachant que la plaque de base (12, 112, 212) présente au moins deux, en particulier plusieurs unités de contact (14, 114, 214) présentant une surface de contact respective (24, 124), sachant que les surfaces de contact (24, 124) peuvent être mises en contact thermique avec le composant (28, 128), sachant que les unités de contact (14, 114, 214) sont conçues de sorte à ce que les écarts relatifs entre les surfaces de contact (24, 124) et la surface de la plaque de base (12, 112, 212), tournée vers le composant (28, 128) sont modifiables et sachant que l'écart entre la plaque de base (12, 112, 212) et le composant (28, 128) est modifiable,
**caractérisé en ce**
**que** les unités de contact (14, 114, 214) sont conçues de telle sorte que les écarts relatifs entre les surfaces de contact (24, 124) et la surface de la plaque de base (12, 112, 212), tournée vers le composant (28, 128) sont modifiables en fonction d'un changement de la pression d'appui avec laquelle la plaque de base (12, 112, 212) est pressée contre le composant (28, 128), lequel changement de la pression d'appui est provoqué par un changement de l'écart entre la plaque de base (12, 112, 212) et le composant (28, 128).

2. Dispositif de transfert de chaleur (10, 110, 210) selon la revendication 1,
**caractérisé en ce**
**que** les unités de contact (14, 114, 214) sont logées de manière déplaçable dans des évidements (30) qui sont prévus dans la plaque de base (12, 112, 212), sachant que notamment les unités de contact (14, 114, 214) peuvent être déplacées dans une position rentrée dans laquelle les surfaces de contact des unités de contact (14, 114, 214) affleurent la surface de la plaque de base (12, 112, 212), tournée vers le composant (28, 128).

3. Dispositif de transfert de chaleur (10, 110, 210) selon une des revendications précédentes,
**caractérisé en ce**
**que** les unités de contact (14, 114) sont constituées d'un matériau thermoconducteur, élastique prévu sur le côté de la plaque de base (12) tourné vers le composant à braser (128), notamment d'une pâte métallique, d'une résine époxy mélangée à des particules métalliques et/ou d'un matériau élastomère conducteur.

4. Dispositif de transfert de chaleur (10, 110, 210) selon une des revendications précédentes,
**caractérisé en ce**
**qu'**une unité de contact respective (214) comprend une broche de contact (16, 116) réglable par rapport à la plaque de base (112, 212) et présentant la surface de contact (24).

5. Dispositif de transfert de chaleur (10, 110, 210) selon la revendication 4,
**caractérisé en ce**
**qu'**un matériau thermoconducteur, élastique, notamment une pâte métallique, une résine époxy mélangée à des particules métalliques et/ou un matériau élastomère conducteur, est appliqué sur une face frontale de la broche de contact (16, 116).

6. Dispositif de transfert de chaleur (10, 110, 210) selon la revendication 4 ou 5,
**caractérisé en ce**
**que** les broches de contact (16, 116) sont montées sur ressort.

7. Dispositif de transfert de chaleur (10, 110, 210) selon la revendication 6,
**caractérisé en ce**
**qu'**une broche de contact (16, 116) respective présente un manchon (18, 118) thermiquement conducteur et fermé d'un côté, dont la face frontale fermée est tournée vers le composant à braser (28, 128) et qu'un ressort (20, 120), notamment un ressort hélicoïdal, est logé dans le manchon, lequel ressort dépasse, au moins à l'état détendu, hors de la surface frontale ouverte du manchon (18, 118) et est relié thermiquement au manchon (18, 118), sachant qu'un boulon thermiquement conducteur (22, 122) est logé notamment dans une partie intérieure du ressort (20, 120) à son extrémité libre dépassant du manchon (18, 118), lequel boulon est relié thermiquement au ressort (20, 120), sachant qu'avantageusement, une face frontale côté extrémité, du boulon (22, 122) se termine à fleur de la face frontale de l'extrémité libre du ressort (20, 122) ou dépasse du ressort, ou qu'une broche de contact (316) respective présente un boulon thermiquement conducteur (319) dont la face frontale est tournée vers le composant à braser (28, 128) et que sur le boulon (319), un ressort (320), notamment un ressort hélicoïdal, est logé au niveau d'un ergot à ressort du boulon (319), sachant que le ressort (320) s'appuie notamment sur son côté opposé à l'ergot à ressort (323) contre une plaque de contact (321) de préférence commune à d'autres broches de contact (316) et sachant que le boulon (319) présente, sur le siège de l'ergot à ressort (323), une saillie radiale (325) qui s'appuie contre un étranglement radial de l'évidement (330) de la plaque de base (312), à l'état détendu du ressort (320)

8. Dispositif de transfert de chaleur (10, 110, 210) selon une des revendications précédentes,
**caractérisé en ce**
**que** les broches de contact (16, 116) sont réglables mécaniquement, pneumatiquement, hydrauliquement ou électromagnétiquement.

9. Dispositif de transfert de chaleur (10, 110, 210) selon une des revendications 4 à 8,
**caractérisé en ce**
**que** les broches de contact (116) sont disposées dans au moins un groupe comprenant respectivement plusieurs broches de contact (116), sachant qu'à l'état détendu, notamment les écarts entre les surfaces de contact des broches de contact (116) d'un groupe et la plaque de base diminuent de l'intérieur vers l'extérieur par rapport à la position des broches de contact (116) dans le groupe.

10. Dispositif de transfert de chaleur (10, 110, 210) selon une des revendications précédentes,
**caractérisé en ce**
**que** la plaque de base (12, 112, 212) est recourbée sur son côté tourné vers le composant à braser (28, 128) et présente notamment une complémentarité de forme par rapport au composant à braser (28, 128).

11. Dispositif de brasage (200), notamment dispositif de brasage sous vide, avec au moins un dispositif de transfert de chaleur (10, 110, 210) selon une des revendications précédentes et avec un support pour composant (36) dans lequel au moins un composant à braser (28, 128) est fixable,
**caractérisé en ce**
**que** le support pour composant (26) et la plaque de base (12, 112, 212) sont déplaçables l'un vers l'autre de telle façon qu'ainsi, les surfaces de contact des unités de contact (14, 114, 214) au choix peuvent être mises en contact thermoconducteur avec le composant à braser (28, 128) et que les écarts relatifs entre les surfaces de contact (24, 124) et la surface de la plaque de base (12, 112, 212) tournée vers le composant (28, 128) sont modifiables.

12. Dispositif de brasage (200) selon la revendication 11,
**caractérisé en ce**
**que** le support pour composant (36) comprend une plaque support (26) pour y poser le composant à braser (28, 128) et un dispositif de pressage qui est conçu pour presser au moins le composant à braser (28, 128) notamment par ressort contre la plaque support (26), sachant que la plaque support (26) présente au moins un passage (32) pour y passer les unités de contact (14, 114, 214) pour établir un contact thermique entre les surfaces de contact (24, 124) des unités de contact (14, 114, 214) et le composant à braser (28, 128).

13. Dispositif de brasage (200) selon la revendication 11 ou 12,
**caractérisé en ce**
**que** le support pour composant (36) et la plaque de base (12, 112, 212) sont déplaçables l'un vers l'autre, sachant que le support pour composant (36) et/ou le dispositif de transfert de chaleur (10, 110, 210) sont conçus de façon à ce qu'une force soit exercée sur le composant à braser (28, 128) par le biais des unités de contact (14, 114, 214), lors d'un rapprochement entre le support pour composant (36) et la plaque de base (12, 112, 212) de telle sorte que le composant à braser (28, 128) est soulevé de la plaque support (26).

14. Dispositif de brasage (200) selon la revendication 11 à 13,
**caractérisé en ce**
**que** le support pour composant (36) présente au moins une barre d'accumulation de chaleur (34) qui peut être mise en contact thermoconducteur avec le composant à braser (28, 128), notamment avec une partie marginale du composant (28, 128), sachant que notamment le dispositif de pressage est conçu pour presser la barre d'accumulation de chaleur (34) par ressort contre le composant à braser (28, 128).
